# EUROPEAN PATENT SPECIFICATION

(11) **EP 3 502 390 B1**
(45) Date of publication and mention of the grant of the patent: **07.04.2021**
(21) Application number: 18211535.2
(22) Date of filing: 11.12.2018
(51) Int. Cl.: E05F 15/42, B61D 19/02

(54) **DOOR ENTRAPMENT DETECTION DEVICE AND DOOR ENTRAPMENT DETECTION SYSTEM**
TÜREINKLEMMUNGDETEKTIONSVORRICHTUNG UND TÜREINKLEMMUNGDETEKTIONSSYSTEM
DISPOSITIF ET SYSTÈME DE DÉTECTION DE PIÉGEAGE DE PORTE

(30) Priority: 19.12.2017 JP 2017243151
(43) Date of publication of application: 26.06.2019
(73) Proprietor: Nabtesco Corporation, Tokyo 102-0093 (JP)
(72) Inventor: ISHIDA, Takuji, Tokyo (JP); NAKATANI, Kouji, Tokyo (JP); SAKAMOTO, Kiyoshi, Tokyo (JP); TAKAYAMA, Yuki, Kobe-shi, Hyogo 651-2271 (JP); UEDA, Shinji, Kobe-shi, Hyogo 651-2271 (JP); HONOKI, Yutaka, Kobe-shi, Hyogo 651-2271 (JP)
(74) Representative: Grünecker Patent- und Rechtsanwälte PartG mbB

(56) References cited:
- WO-A1-2017/038404
- JP-A- 2007 255 092
- JP-A- 2016 125 340

## Description

The present invention relates to a door entrapment detection device and a door entrapment detection system for a vehicle.

Japanese Laid-Open Patent Publication No. 2016-125340 describes a conventional door entrapment detection device. The conventional door entrapment detection device includes a rotary body at a leading end of a door. The door entrapment detection device determines whether an object is trapped by the door based on rotation of the rotary body JP 2007-255092 discloses another example of a door entrapment detection device.

The conventional door entrapment detection device may interfere with the scheduled operation of a vehicle. Thus, there is room for improvement. An object of the invention is to provide a door entrapment detection device and a door entrapment detection system that limit interference with a scheduled operation of a vehicle.

To achieve the above object, a door entrapment detection device includes a determination unit and a reference value setting unit. The determination unit is configured to determine whether a door entrapment state is present based on a comparison result between an output value from a sensor configured to detect rotation of a rotary body provided at a leading end of a vehicle door and a reference value serving as a criterion for determining whether the door entrapment state is present. The door entrapment detection device further comprises a reference value setting unit which is configured to change the reference value, based on at least one of a surrounding state of the vehicle door or an operation of the vehicle door.

According to this configuration, the reference value is changed based on a surrounding state of the vehicle door and an operation of the vehicle door. Thus, as compared to a case in which the reference value is fixed to a predetermined value, door entrapment is appropriately detected in accordance with the situation. This limits occurrence of interference with the scheduled operation of the vehicle.

In the door entrapment detection device, the reference value setting unit is configured to change the reference value so that the reference value that is based on a period from when the vehicle door is fully closed until the vehicle door is locked differs from the reference value that is based on a period after the vehicle door is locked.

Erroneous determination of door entrapment interferes with the scheduled operation of the vehicle. The significance of effects on the scheduled operation of the vehicle due to erroneous determination of door entrapment is different depending on if the vehicle is in a period before the vehicle door is locked or in a period after the vehicle door is locked. In this regard, according to the above configuration, the reference value setting unit changes the reference value in accordance with each of the period before the vehicle door is locked and the period after the vehicle door is locked. This allows the door entrapment determination to be performed in accordance with changes in surrounding states of the vehicle door using reference values corresponding to each surrounding state of the vehicle door. Thus, occurrence of interference with the scheduled operation of the vehicle is limited. Here, the "surrounding states of the vehicle door" include a surrounding state in which when the vehicle is at a standstill and the vehicle door is not moved relative to the station platform area and a surrounding state in which the vehicle door is moved relative to the station platform area after departure.

In the door entrapment detection device, the reference value setting unit is configured to change the reference value so that the reference value that is based on if a vehicle is at a standstill differs from the reference value that is based on if the vehicle departs and a tail end of the vehicle reaches a predetermined position with relation to a station platform.

A situation in which door entrapment may occur corresponds to when the vehicle is at a standstill or when the vehicle is moving along a station platform. Thus, when the vehicle is separated from the station platform area, there is little or no possibility that door entrapment will occur. If erroneous entrapment determination occurs when the vehicle is separated from the station platform area, the scheduled operation of the vehicle may be interfered with. In this regard, according to the above configuration, the reference value setting unit sets the reference value that differs based on if the vehicle is at a standstill and if the tail end of the vehicle reaches the predetermined position with relation to the station platform. This limits occurrence of interference with the scheduled operation of the vehicle.

In the door entrapment detection device, the reference value setting unit is configured to change the reference value so that the reference value that is based on if a vehicle is at a standstill differs from the reference value that is based on if a predetermined speed is reached after departure of the vehicle or a predetermined time elapses after departure of the vehicle.

A situation in which door entrapment may occur corresponds to when the vehicle is at a standstill or when the vehicle is moving along a station platform. Thus, when the vehicle is at a speed that the vehicle may reach at a position away from the station platform area, there is little or no possibility that door entrapment will occur. Additionally, when the time elapsed after departure is longer than time the vehicle takes to leave the station platform, there is little or no possibility that door entrapment will occur. If erroneous entrapment determination occurs when the vehicle is separated from the station platform area, the scheduled operation of the vehicle may be interfered with. In this regard, according to the above configuration, the reference value setting unit sets the reference value that differs based on if the vehicle is at a standstill and if the predetermined speed is reached after departure of the vehicle or the predetermined time elapses after departure of the vehicle. This limits occurrence of interference with the scheduled operation of the vehicle.

In the door entrapment detection device, the reference value setting unit is configured to change the reference value in accordance with a rotation direction of the rotary body.

Erroneous determination of door entrapment interferes with the scheduled operation of the vehicle. When erroneous determination of door entrapment occurs, the significance of effects on the scheduled operation of the vehicle due to the erroneous determination differs based on a case in which the rotary body rotates in an inner rotation direction and a case in which the rotary body rotates in an outer rotation direction. In this regard, according to the above configuration, the reference value is changed in accordance with the rotation direction of the rotary body. This allows the door entrapment determination to be performed in accordance with scheduled operations of the vehicle door using reference values corresponding to each operation of the vehicle door. Thus, occurrence of interference with the scheduled operation of the vehicle is limited.

In the door entrapment detection device, the reference value setting unit is configured to change the reference value in accordance with a congestion level based on at least one of a passenger rate or a density of people at a station platform.

When the station or the inside of the vehicle is crowded, erroneous determination of door entrapment occurs more frequently. Erroneous determination of door entrapment interferes with the scheduled operation of the vehicle. In this regard, according to the above configuration, the reference value is changed based on the congestion level. This allows the door entrapment determination to be performed in accordance with congestion levels using reference values corresponding to each congestion level. Thus, occurrence of interference with the scheduled operation of the vehicle is limited.

In the door entrapment detection device, the reference value setting unit is configured to change the reference value in accordance with a section of a route of a vehicle.

A congestion level differs depending on sections of the route. When the same reference value is used in a section of the route to determine door entrapment, the frequency of occurrence of erroneous entrapment determination differs based on different sections of the route. When the scheduled operation of the vehicle is interfered with in a section of the route, the scheduled operation of the vehicle may be affected in other sections of the route. Thus, it is not preferable to allow interference with the scheduled operation of the vehicle in any section of the route. In this regard, according to the above configuration, the reference value is changed based on the section of the route. This allows the door entrapment determination to be performed in accordance with sections of the route using reference values corresponding to each section of the route. Thus, occurrence of interference with the scheduled operation of the vehicle is limited.

In the door entrapment detection device, the reference value setting unit is configured to change the reference value based on information corresponding to at least one of the surrounding state of the vehicle door or the operation of the vehicle door transmitted from a vehicle information management device.

The vehicle information management device manages information corresponding to at least one of the surrounding state of the vehicle door or the operation of the vehicle door. In the above configuration, the information corresponding to at least one of the surrounding state of the vehicle door or the operation of the vehicle door obtained from the vehicle information management device is used. Therefore, according to this configuration, the reference value can be changed without adding a new sensor for detecting the surrounding states of the vehicle doors and the operation of the vehicle doors managed by the vehicle information management device.

The door entrapment detection device further includes the sensor including the rotary body provided on a leading end surface of the vehicle door and a rotation detector configured to detect rotation of the rotary body.

According to this configuration, the door entrapment detection device including the sensor is provided.

In the door entrapment detection device, the rotary body is covered with a cover that exposes a side of the rotary body at a leading end of the vehicle door, and the cover is in contact with a sealing portion facing the rotary body such that the rotary body is rotatable when the vehicle door is fully closed.

According to this configuration, when the vehicle door is fully closed, the sealing portion is in contact with the cover such that the rotary body is rotatable. For this reason, when the vehicle door is fully closed, the rotary body is out of contact with the sealing portion. Even when the rotary body is in contact with the sealing portion, a frictional force between the rotary body and the sealing portion is small. Since the frictional force between the rotary body and the sealing portion is small as described above, if door entrapment occurs, the trapped object can be easily drawn out.

To achieve the above object, a door entrapment detection system includes the door entrapment detection device described above and a door control device that is configured to control the vehicle door.

portion. This hinders the sealing portion from further approaching the rotary body of the vehicle door, and the distance between the sealing portion and the rotary body is set. If the distance between the sealing portion and the rotary body is not set, the sealing portion may come into contact with the rotary body, and a frictional force may be applied between the rotary body and the sealing portion. In this regard, according to the above configuration, the distance between the sealing portion and the rotary body is set, and contact between the sealing portion and the rotary body is limited. This reduces restriction of rotation of the rotary body.

In the door entrapment detection device system, the vehicle door includes a contact portion. When the vehicle door is fully closed, the contact portion is in contact with a sealing portion facing the rotary body to maintain a constant distance between the sealing portion and the rotary body. When the vehicle door is fully closed and the contact portion of the vehicle door is in contact with the sealing portion, the position of the vehicle door is set with respect to the sealing portion. This hinders the sealing portion from further approaching the rotary body of the vehicle door, and the distance between the sealing portion and the rotary body is set. If the distance between the sealing portion and the rotary body is not set, the sealing portion may come into contact with the rotary body, and a frictional force may be applied between the rotary body and the sealing portion. In this regard, according to the above configuration, the distance between the sealing portion and the rotary body is set, and contact between the sealing portion and the rotary body is limited. This reduces restriction of rotation of the rotary body.

According to the door entrapment detection system, the door entrapment detection device determines door entrapment based on the reference value. This reference value is changed in accordance with various situations. For this reason, as compared to a case in which the reference value is fixed to a predetermined value, occurrence of interference with the scheduled operation of the vehicle is limited.

The door entrapment detection device and the door entrapment detection system limit occurrence of interference with the scheduled operation of the vehicle.

Other aspects and advantages of the invention will become apparent from the following description, taken in conjunction with the accompanying drawings, illustrating by way of example the principles of the invention.
Fig. 1 is a schematic view of a vehicle.
Fig. 2 is a front view of vehicle doors.
Fig. 3 is a side view of a vehicle door.
Fig. 4 is a perspective view of the vehicle door.
Fig. 5 is a schematic view of a rotary body.
Fig. 6 is a side view of a shaft.
Fig. 7 is a bottom view of the shaft.
Fig. 8 is a cross-sectional view of a coupling portion of the rotary body.
Fig. 9 is a cross-sectional view of a portion of the rotary body supported by a support member.
Fig. 10 is a plan view of the support member.
Fig. 11 is a cross-sectional view taking along line XI-XI of Fig. 10 in the support member.
Fig. 12 is a perspective view of the rotary body and a cover
Fig. 13 is a partial cross-sectional view of the vehicle doors when fully closed.
Fig. 14 is a front view of an upper portion of a vehicle door.
Fig. 15 is a block diagram of a door entrapment detection system.
Fig. 16 is a chart showing an operation of a door entrapment detection device.
Fig. 17 is a flowchart of a first determination process.
Fig. 18 is a flowchart of a second determination process.
Fig. 19 is a flowchart of a determination value setting process.
Fig. 20 is a table showing determination values of each section of the route.
Fig. 21 is a flowchart of an operation verification process.
Fig. 22 is a cross-sectional view of a modified example of a sealing portion.
Fig. 23 is a partial cross-sectional view of a first modified example of vehicle doors.
Fig. 24 is a cross-sectional view of a second modified example of vehicle doors.
Fig. 25 is a cross-sectional view of a third modified example of vehicle doors.
Fig. 26 is a cross-sectional view of a fourth modified example of vehicle doors.
Fig. 27 is a cross-sectional view of a fifth modified example of vehicle doors.
Fig. 28A is a cross-sectional view of a sixth modified example of vehicle doors coming into contact with each other.
Fig. 28B is a cross-sectional view of the sixth modified example of the vehicle doors when fully closed.
Fig. 29 is a cross-sectional view of a seventh modified example of vehicle doors.

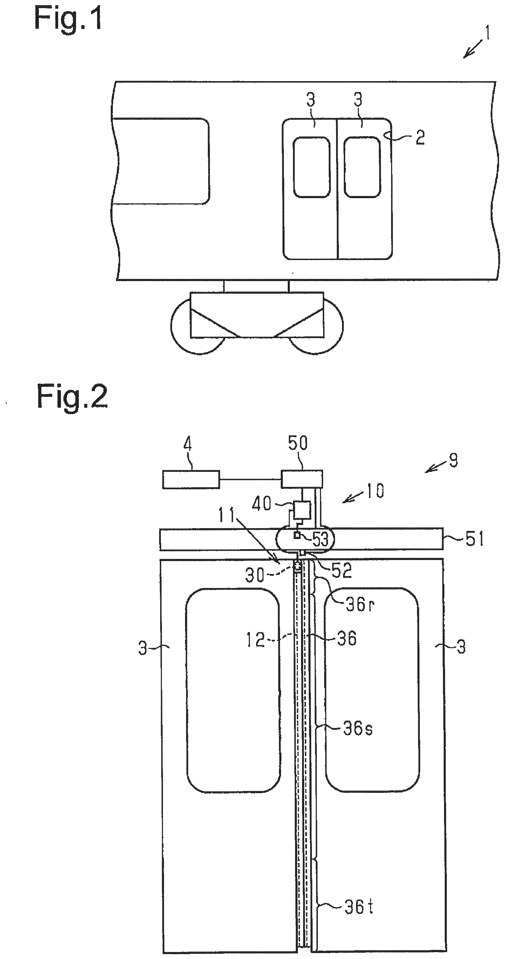

A door entrapment detection system and a door entrapment detection device according to an embodiment will be described with reference to Figs. 1 to 21.

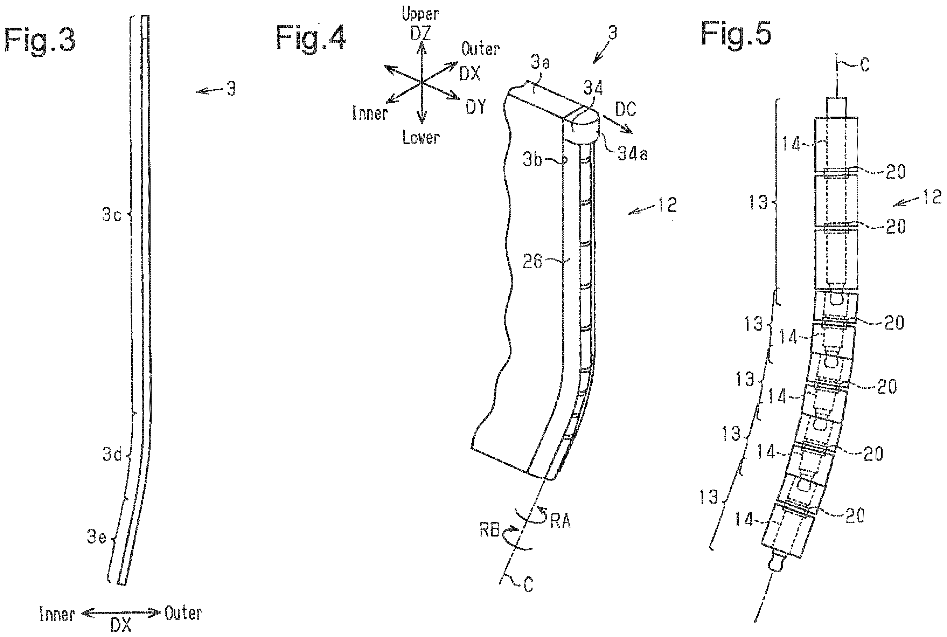

In the present embodiment, the frame of reference for directions is the position of a rotary body 12 (refer to Fig. 4) when a door entrapment sensor 11 (sensor) of a door entrapment detection device 10 is installed on a vehicle door 3. In the reference position of the rotary body 12, "upper" refers to an upper side in a vertical direction, and "lower" refers to a lower side in the vertical direction. In the reference position of the rotary body 12, a vehicle width direction DX refers to a direction intersecting a front-rear direction DY of a vehicle 1 and a vertical direction DZ.

The door entrapment detection device 10 and a door entrapment detection system 9 may be applied to a vehicle door of a railway vehicle. The vehicle door may be applied to any one of a single-opening door, a double-opening door, a folding door, and a plug door. The present embodiment shows an example in which the door entrapment detection device 10 is applied to a double-opening door.

As shown in Figs. 1 and 2, the double-opening vehicle door includes two vehicle doors 3 for opening and closing an entrance 2 of the vehicle 1. The two vehicle doors 3 move in opposite directions with respect to each other. When the vehicle doors 3 are fully closed, leading ends of the vehicle doors 3 are in contact with each other. A door closing sensor 52 for detecting that the vehicle doors 3 are fully closed is provided in the vicinity of the vehicle doors 3. A locking mechanism (not illustrated) for locking the fully-closed vehicle doors 3 is provided in a door driving device 51, which will be described below.

As shown in Fig. 3, the vehicle doors 3 of the present embodiment are curved. Specifically, each of the vehicle doors 3 has a flat portion 3c extending flat in the vertical direction DZ, a curved portion 3d extending downward so as to be curved from the flat portion 3c, and an inclined portion 3e extending obliquely downward from the curved portion 3d. The curved portion 3d bends inward in the vehicle width direction DX as the curved portion 3d extends downward.

The door entrapment detection system 9 includes at least the door entrapment detection device 10 and a door control device 50.

The door control device 50 controls the door driving device 51 that opens and closes the vehicle doors 3. The door control device 50 controls the door driving device 51 based on a signal output from a control device 4 of the vehicle 1 and a signal output from the door entrapment detection device 10.

For example, the control device 4 installed in the vehicle 1 is a vehicle information management device. The vehicle information management device manages various signals such as a door-opening signal, a door-closing signal, a signal indicating a passenger rate (described below) in the vehicle 1, a signal indicating a speed of the vehicle 1, etc. As will be further described below, the vehicle information management device manages, for example, a communication signal, an emergency signal, a warning, information for illuminating or flashing a lamp on the exterior of the vehicle 1, information related to an announcement provided in the vehicle, information indicating that the door entrapment sensor 11 is malfunctioning, and a signal (hereinafter "platform departure signal") indicating that a rearmost vehicle 1 is separate from the end of a station platform after departure of the vehicle 1.

For example, the door control device 50 transmits a release signal for opening the vehicle doors 3 to the door driving device 51 based on the door-opening signal output from the control device 4 of the vehicle 1.

The door control device 50 transmits a signal for closing the doors to the door driving device 51 based on the door-closing signal output from the control device 4 of the vehicle 1. The door control device 50 receives a closing signal output from the door closing sensor 52 based on the vehicle doors 3 being fully closed. The door control device 50 receives a lock signal output from a door lock sensor 53 based on lock completion of the vehicle doors 3.

The door control device 50 receives various signals from the control device 4 of the vehicle 1. The door control device 50 receives, for example, the signal indicating the passenger rate, the signal indicating the speed of the vehicle 1, and the platform departure signal from the control device 4 of the vehicle 1.

Additionally, the door control device 50 receives various signals output from the door entrapment detection device 10 when the door entrapment detection device 10 detects door entrapment. The door control device 50 receives, for example, a "door entrapment signal," an "in-vehicle door entrapment signal," and a "dragging signal" (refer to description below) from the door entrapment detection device 10.

The door control device 50 transmits a release signal for opening the vehicle doors 3 to the door driving device 51 based on reception of the "door entrapment signal."

The door control device 50 transmits a communication signal for reporting that door entrapment may have occurred in the vehicle to the control device 4 of the vehicle 1 based on reception of the "in-vehicle door entrapment signal."

The door control device 50 transmits an emergency signal for reporting that dragging may have occurred to the control device 4 of the vehicle 1 based on reception of the "dragging signal." Upon reception of such an emergency signal, the control device 4 of the vehicle 1 outputs a warning indicating the emergency state. For example, the control device 4 of the vehicle 1 illuminates or flashes an indicator on a driver's console of the vehicle 1 or the lamp on the exterior of the vehicle 1 or otherwise makes an announcement for an emergency stop of the vehicle 1.

The door entrapment detection device 10 detects door entrapment. Door entrapment refers to a door entrapment state in which an object (including a person or part of a person) is trapped between the vehicle doors 3 when the vehicle doors 3 are in a fully-closed state.

The door entrapment detection device 10 includes at least a determination unit 40 that determines door entrapment. The determination unit 40 (refer to description below) determines whether door entrapment has occurred based on an output signal output from the door entrapment sensor 11. Preferably, the door entrapment detection device 10 includes an operation verification unit 45 (refer to description below) that determines whether the door entrapment sensor 11 is operational.

A description will be given of the door entrapment sensor 11 with reference to Figs. 4 to 14.

The door entrapment sensor 11 outputs a signal corresponding to rotation of the rotary body 12. Hereinafter, the door entrapment sensor 11 will be described in detail.

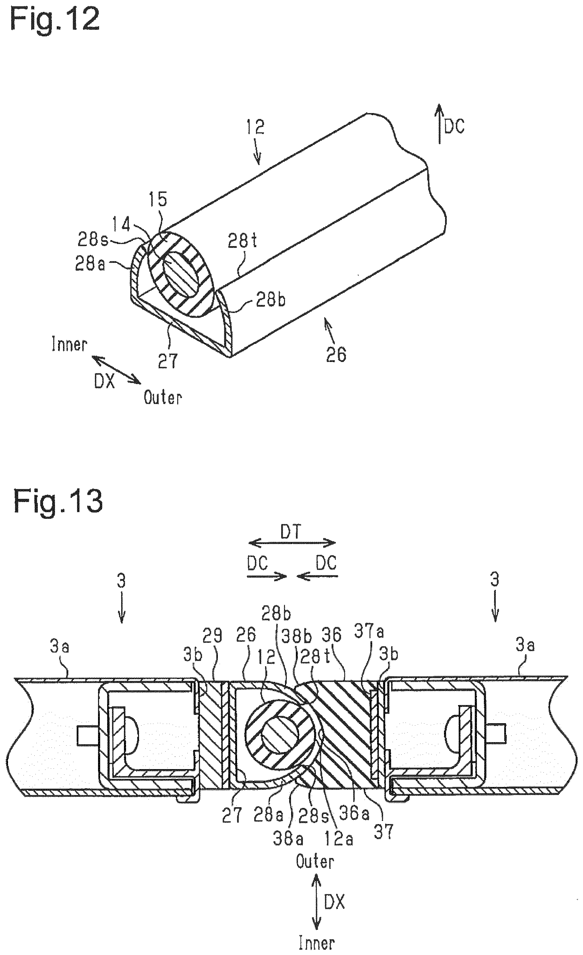

The door entrapment sensor 11 is provided on a leading end surface 3b of a door main body 3a of one of the vehicle doors 3. A sealing portion 36 is provided on the other vehicle door 3 at a portion facing the leading end of the one of the vehicle doors 3, that is, a leading end surface 3b of a door main body 3a (refer to Fig. 13). As will be described below, when the vehicle doors 3 are fully closed, the sealing portion 36 seals a gap between the leading end of one of the vehicle doors 3 and the leading end of the other vehicle door 3.

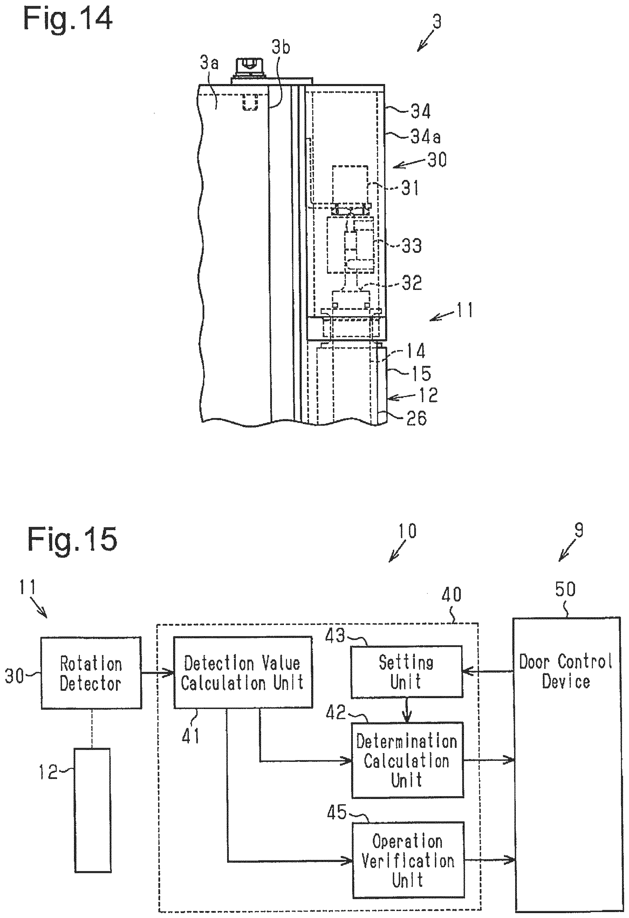

As shown in Fig. 4, the door entrapment sensor 11 includes the rotary body 12 and a rotation detector 30 (refer to Fig. 14) that detects rotation of the rotary body 12. The rotary body 12 extends along the leading end of the vehicle door 3. Therefore, the rotary body 12 is entirely curved in conformance with the curvature of the vehicle door 3.

As shown in Fig. 5, the rotary body 12 is configured as a coupled body including divided rotary bodies 13. The rotary body 12 includes, for example, one divided rotary body 13 provided in the flat portion 3c of the vehicle door 3, multiple divided rotary bodies 13 provided in the curved portion 3d of the vehicle door 3, and one divided rotary body 13 provided in the inclined portion 3e of the vehicle door 3. Each of the divided rotary bodies 13 has a shaft 14 and a tubular elastic member 15 covering the shaft 14. Multiple elastic members 15 are attached to one shaft 14. The elastic members 15 are attached to the shaft 14 so that the shaft 14 is inserted into through holes of the elastic members 15. The elastic members 15 are spaced apart by gaps having a predetermined width and are attached to the shafts 14. Support members 20 (described below) are arranged in the gaps. The shafts 14 are made of metal such as iron, stainless steel, or an aluminum alloy. The elastic members 15 are formed of rubber, an elastomer, or an elastic resin (foam member). The elastic members 15 may be formed by stacking any two of rubber, an elastomer, and an elastic resin (foam member).

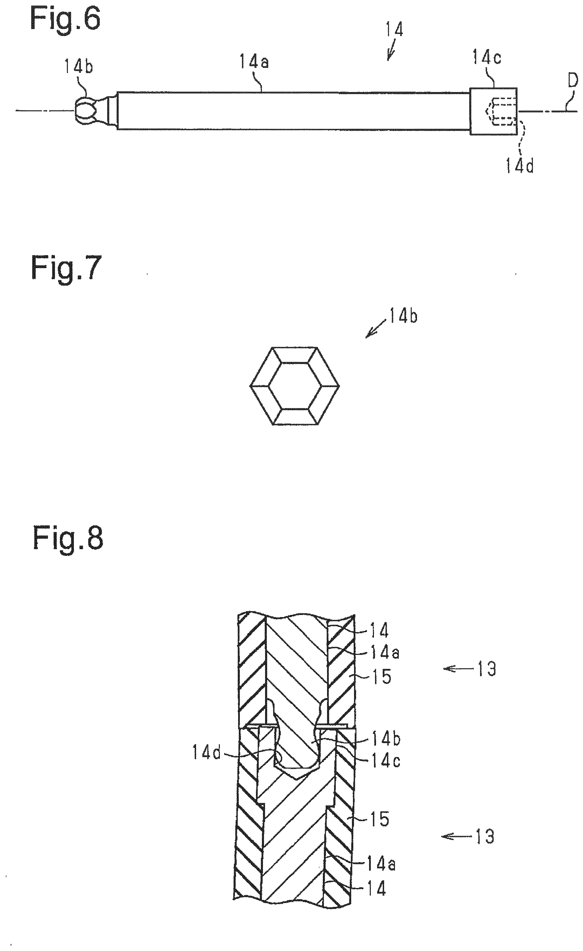

As shown in Fig. 6, the shaft 14 has a main shaft body 14a, a joint portion 14b arranged on one end of the main shaft body 14a, and a coupling portion 14c arranged on the other end of the main shaft body 14a. For example, the main shaft body 14a has a cylindrical shape. The joint portion 14b is coupled to the coupling portion 14c of another shaft 14.

As shown in Fig. 7, the joint portion 14b is polygonal in a cross section perpendicular to a center axis D of the shaft 14. Preferably, the cross-sectional shape is a regular polygon. Preferably, the cross-sectional shape is a regular hexagon. The joint portion 14b has a tapered diameter in a cross section parallel to an axis (center axis D) of the joint portion 14b and including the axis (center axis D). The size of a cross section perpendicular to the center axis D of the shaft 14 gradually increases from the distal end of the joint portion 14b toward the main shaft body 14a to reach a maximum area, and then gradually decreases. The joint portion 14b has a side surface that is generally circular or elliptical. The coupling portion 14c has a hole 14d into which the joint portion 14b is inserted. The hole 14d of the coupling portion 14c has a cross section perpendicular to the center axis D of the shaft 14, having the same shape as the cross section of the joint portion 14b. When the cross-sectional shape of the joint portion 14b is a regular hexagon, the shape of the hole 14d of the coupling portion 14c is a regular hexagon. The size of the cross section of the hole 14d (area of a hollow portion of the hole 14d) is constant along the center axis D of the shaft 14 and greater than the size of the cross section of the joint portion 14b. The polygonal shape includes, for example, the shape of a star, a shape having a side that is partially recessed, and the shape of certain flower petals. Further, the polygonal shape may have a side that is partially curved.

As shown in Fig. 8, when two shafts 14 are coupled so that the center axes D of the shafts 14 intersect within a predetermined angle range, corners of the joint portion 14b touch corners of walls defining the hole 14d in the coupling portion 14c. According to this structure, the two coupled shafts 14 rotate synchronously. That is, when one shaft 14 rotates, the other shaft 14 rotates at the same angle as a rotation angle of the one shaft 14.

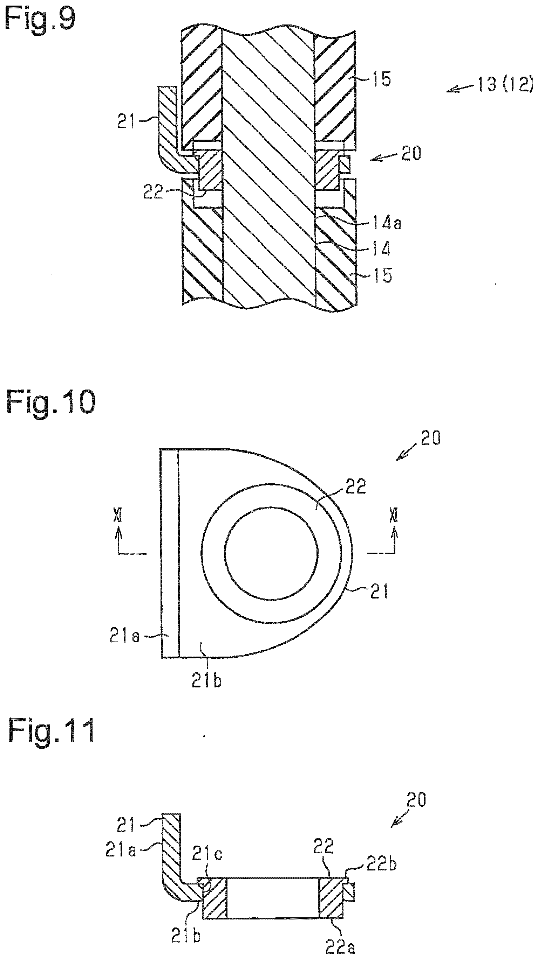

As shown in Figs. 9, 10, and 11, each divided rotary body 13 is rotatably supported by the support member 20. The support member 20 includes a bracket 21 and a bearing 22. The bracket 21 is fixed to an attachment member 29 (e.g., a spacer) attached to the leading end surface 3b of the vehicle door 3. The bracket 21 has a fixed portion 21a fixed to the attachment member 29 and a support portion 21b extending from the fixed portion 21a to intersect the fixed portion 21a and supporting the shaft 14. A circular through hole 21c extends through the support portion 21b. The bearing 22 includes a flange 22b and is fit into the through hole 21c. The flange 22b extends radially outward from a main body 22a of the bearing 22. The bearing 22 is rotatably supported by the bracket 21 when the flange 22b is in contact with an upper surface of the support portion 21b of the bracket 21. The shaft 14 is inserted into the bearing 22. The bearing 22 is fixed to the shaft 14.

A description will be given of a cover 26 that covers the rotary body 12 with reference to Figs. 12 and 13.

As shown in Fig. 12, at least a part of the rotary body 12 is covered with the cover 26. The cover 26 is fixed to the leading end surface 3b of the vehicle door 3 via the attachment member 29. The cover 26 includes a base portion 27 fixed to the attachment member 29 and two side walls (hereafter, referred to as first side wall 28a and second side wall 28b) extending from opposite ends of the base portion 27 in the vehicle width direction DX to the door leading side.

The side wall located at the inner side in the vehicle width direction DX (hereinafter, referred to as the "first side wall 28a") is shaped to extend from the base portion 27 toward the door leading end. For example, the first side wall 28a may be shaped to extend from the base portion 27 toward the door leading end curving from the middle and gradually heading outward. The side wall located at the outer side in the vehicle width direction DX (hereinafter, referred to as the "second side wall 28b") is shaped to extend from the base portion 27 toward the door leading end. For example, the second side wall 28b may be shaped to extend from the base portion 27 toward the door leading end curving from the middle and gradually heading inward.

The first side wall 28a and the second side wall 28b of the cover 26 respectively have an end surface 28s and an end surface 28t extending toward the door leading end beyond a plane that extends through the axis C of the rotary body 12 and is perpendicular to an opening-closing direction DT of the vehicle doors 3.

The rotary body 12 is disposed between the first side wall 28a and the second side wall 28b. The rotary body 12 is not in contact with any one of the base portion 27, the first side wall 28a, and the second side wall 28b of the cover 26. The cover 26 exposes a portion of the rotary body 12 at the door leading end. The portion of the rotary body 12 at the door leading end is disposed toward the door leading end in a closing direction DC of the vehicle doors 3 beyond the leading end surfaces of the cover 26 (i.e., the end surface 28s of the first side wall 28a and the end surface 28t of the second side wall 28b).

The sealing portion 36 will be described with reference to Fig. 13.

As described above, when the vehicle doors 3 are fully closed, the sealing portion 36 seals the gap between the leading ends of the two vehicle doors 3.

The sealing portion 36 is attached to the vehicle door 3 facing a vehicle door 3 to which the door entrapment detection device 10 is attached. The sealing portion 36 is provided at the leading end of the vehicle door 3. When the vehicle doors 3 are fully closed, the sealing portion 36 comes into contact with the cover 26 to seal the gap between the leading ends of the two vehicle doors 3. Preferably, the sealing portion 36 will not contact the rotary body 12.

Specifically, the sealing portion 36 is arranged in conformance with the leading end surface 3b of the vehicle door 3. The sealing portion 36 includes a base portion 37 fixed to the leading end surface 3b of the vehicle door 3 and two protrusions 38 (hereafter, referred to as a first protrusion 38a and a second protrusion 38b) extending from opposite ends of the base portion 37 in the vehicle width direction DX toward the door leading end. The base portion 37 may include a support member 37a. Preferably, the support member 37a has higher rigidity than the base portion 37.

The protrusion located at the inner side in the vehicle width direction DX (hereinafter, referred to as the "first protrusion 38a") extends from the base portion 37 toward the door leading end. When the vehicle doors 3 are fully closed, the first protrusion 38a is in contact with an inner surface (a surface at an inner side in the vehicle width direction DX) of the first side wall 28a of the cover 26.

The protrusion located at the outer side in the vehicle width direction DX (hereinafter, referred to as the "second protrusion 38b") extends from the base portion 37 toward the door leading end. When the vehicle doors 3 are fully closed, the second protrusion 38b is in contact with an outer surface (a surface at an outer side in the vehicle width direction DX) of the second side wall 28b of the cover 26.

A leading end surface 36a is curved and extends from a distal end of the first protrusion 38a at the door leading side to a distal end of the second protrusion 38b at the door leading side. When the vehicle doors 3 are fully closed, the leading end surface 36a is not in contact with a surface 12a of the rotary body 12. Thus, when the vehicle doors 3 are fully closed, rotation of the rotary body 12 is not restricted, which allows for drawing out of an object trapped by the doors.

The sealing portion 36 is elastic. The sealing portion 36 is formed of, for example, rubber, an elastomer, or an elastic resin (foam member). The sealing portion 36 may be formed by stacking any two of rubber, an elastomer, and an elastic resin (foam member). The sealing portion 36 has a central part 36s (refer to Fig. 2) extending in a longitudinal direction (direction extending along the axis C of the rotary body 12). The central part 36s deforms more easily than parts other than the central part 36s. Specifically, the central part 36s is preferably formed of a substance (soft substance) having a smaller hardness value than a substance forming an upper portion 36r and a lower portion 36t of the sealing portion 36, respective located above and below the central part 36s. For example, the hardness is a value measured using a durometer. The sealing portion 36 may have hollow and solid structures to change the easiness of deformation of the sealing portion 36.

The rotation detector 30 will be described with reference to Fig. 14.

The rotation detector 30 is disposed in an upper portion of the vehicle door 3 to which the rotary body 12 is attached. The rotation detector 30 includes an encoder 31 for detecting rotation, an adapter 32 attached to the rotary body 12, and a coupling member 33 for coupling the adapter 32 and the encoder 31. One end portion of the adapter 32 is fixed to an upper portion of the divided rotary body 13 disposed at an uppermost portion of the rotary body 12, and the other end portion of the adapter 32 is fixed to the coupling member 33.

Whenever a rotation angle of the rotary body 12 reaches a predetermined angle, the rotation detector 30 outputs a pair of two output signals, the phases of which are shifted from each other. The rotation direction and the rotation angle of the rotary body 12 are computed by predetermined calculation based on the two output signals. The output signals are output, for example, as pulse signals.

The rotation detector 30 is covered by a case 34. The case 34 is made of a metal such as iron, stainless steel, or an aluminum alloy. The case 34 is strong enough so that the case 34 is not deformed by a force applied from the sealing portion 36 when the vehicle doors 3 are fully closed. A through hole extends through a lower portion of the case 34 to allow for insertion of the adapter 32. The case 34 covers the door leading side of the rotation detector 30 in a plan view. The case 34 has a contact portion 34a that contacts the sealing portion 36 at the door leading side. The contact portion 34a of the case 34 is in contact with the sealing portion 36 when the vehicle doors 3 are fully closed. When the vehicle doors 3 are fully closed, the case 34 is in contact with an upper portion of the sealing portion 36 to set a predetermined distance between the cover 26 of one of the vehicle doors 3 and the sealing portion 36 of the other vehicle door 3. This restricts excessive entry of the cover 26 between the two protrusions (the first protrusion 38a and the second protrusion 38b) of the sealing portion 36 and provides a gap between the rotary body 12 and the sealing portion 36.

A description will be given of door entrapment detection of the vehicle doors 3.

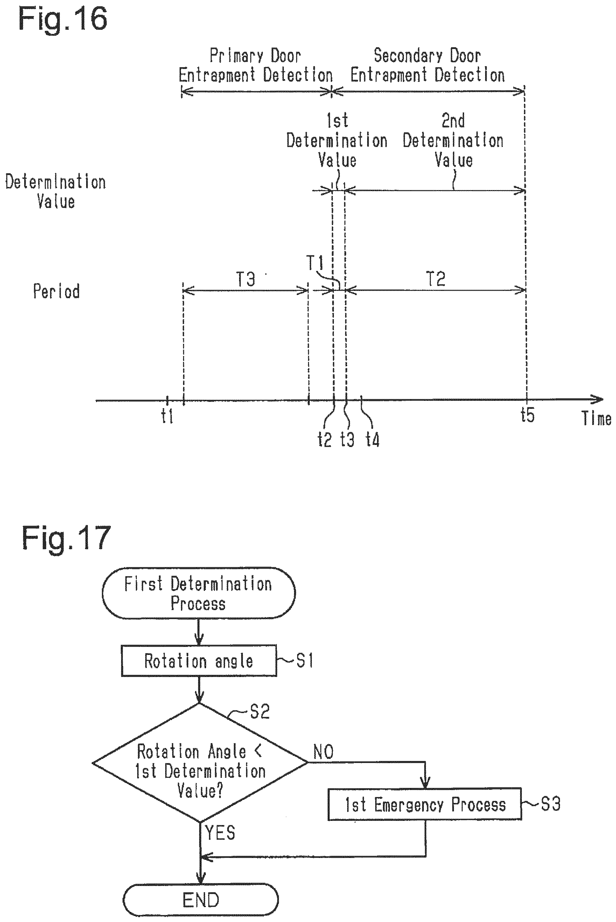

The door entrapment detection of the vehicle doors 3 includes a primary door entrapment detection performed when the vehicle doors 3 are closing and a secondary door entrapment detection performed after the vehicle doors 3 are fully closed. Preferably, both the primary door entrapment detection and the secondary door entrapment detection are performed. The primary door entrapment detection is performed based on a motor current or a moving speed of the vehicle doors 3. The secondary door entrapment detection is performed using the door entrapment sensor 11. The primary door entrapment detection is performed in a period from start of closing to completion of fully closing (a period from time t1 to time t2 in Fig. 16).

The primary door entrapment detection is determined by the door control device 50. The secondary door entrapment detection is determined by the determination unit 40. The primary door entrapment detection is as follows.

When an object is trapped between the two vehicle doors 3, the two vehicle doors 3 may not be able to approach each other due to the presence of the object. Consequently, the door closing sensor 52 does not detect the fully-closed state of the vehicle doors 3 within a predetermined time from the start of closing the vehicle doors 3. For the predetermined time from the start of closing the vehicle doors 3, the door control device 50 determines whether the vehicle doors 3 are normally closed or not, that is, whether door entrapment has occurred based on changes in the motor current or the moving speed of the vehicle doors 3.

When a thin object such as a strap is trapped between the two vehicle doors 3, the two vehicle doors 3 approach each other and are fully closed despite the presence of the object. In this case, within the predetermined time from start of closing the vehicle doors 3, the door closing sensor 52 detects the fully-closed state of the vehicle doors 3. That is, when a trapped object is thin, it may be determined that door entrapment has not occurred even through door entrapment has occurred.

The secondary door entrapment detection is as follows.

When the two vehicle doors 3 are fully closed with an object trapped in between, an action of a person to draw out the trapped object or movement of the trapped object rotates the rotary body 12. The rotation detector 30 transmits a signal corresponding to the rotation of the rotary body 12 to the determination unit 40. The determination unit 40 determines occurrence of door entrapment based on this signal. In this way, even in the fully-closed state, door entrapment can be detected with the door entrapment sensor 11. Thus, even when door entrapment of an object is not detected by the primary door entrapment detection, the door entrapment may be detected by the door entrapment sensor 11.

A detailed description will be given of the door entrapment detection device 10 that performs the secondary door entrapment detection with reference to Figs. 15 to 20. The door entrapment detection device 10 may perform not only the secondary door entrapment detection but also the primary door entrapment detection. Hereinafter, only the secondary door entrapment detection will be described.

As described above, the door entrapment detection device 10 according to the present embodiment includes the determination unit 40 and the operation verification unit 45.

As shown in Fig. 15, the determination unit 40 includes a detection value calculation unit 41 that computes an output value (hereinafter, referred to as a "detection value") based on an output signal of the rotation detector 30, a determination calculation unit 42 (determination unit) that determines occurrence of door entrapment based on the detection value, and a setting unit 43 (reference value setting unit) that sets a determination value corresponding to a reference value (referred to as a "determination value" in description below).

The detection value calculation unit 41 detects the rotation direction of the rotary body 12 to compute a rotation amount of the rotary body 12 based on at least two output signals output from the rotation detector 30. Examples of the rotation amount include a rotation angle, a rotation speed, and acceleration of rotation. In the present embodiment, the detection value calculation unit 41 computes the rotation angle.

The detection value calculation unit 41 detects the rotation direction of the rotary body 12, for example, based on the direction of phases that are shifted from each other in the two output signals. In the present embodiment, an "outer rotation direction RA" refers to the rotation direction of the rotary body 12 when the rotary body 12 rotates so that the portion of the rotary body 12 exposed from the cover 26 moves outward in the vehicle width direction DX. An "inner rotation direction RB" refers to the rotation direction opposite to the outer rotation direction. The detection value calculation unit 41 computes the rotation angle based on any one of the output signals. The detection value calculation unit 41 counts, for example, pulses of an output signal in a specified time (e.g., a specified time set within a range of tens of microseconds to hundreds of microseconds), and uses the count value or a value corresponding to the count value as the rotation angle.

The detection value calculation unit 41 computes the rotation angle of the rotary body 12 at least in a predetermined period (refer to description below) in which the determination calculation unit 42 (determination unit) determines occurrence of door entrapment.

In an example described below, the detection value calculation unit41 computes the rotation angle of the rotary body 12 in a first period T1 (refer to Fig. 16) described below. In a second period T2 (refer to Fig. 16) described below, the detection value calculation unit 41 computes the rotation angle of the rotary body 12 and detects the rotation direction in a predetermined cycle. The first period T1 and the second period T2 may have the same specified time or different specified times.

As described above, the determination calculation unit 42 determines whether a door entrapment state is present based on the detection value. This determination is performed in a predetermined period described below.

The start time of the predetermined period is one of (A) and (B) described below. The end time of the predetermined period is one of (A) to (D) described below. The predetermined period is set by one of (A) and (B) corresponding to the start time and one of (A) to (D) corresponding to the end time. If the reference time is set to a point in time when the vehicle doors 3 start a closing operation, both (A) and (B) corresponding to the start time are earlier than any one of (A) to (D) corresponding to the end time.

The "start time of the predetermined period" corresponds to one of (A) when the vehicle doors 3 start a closing operation and the distance between the leading ends of the vehicle doors 3 or between the door leading end of the vehicle door 3 and an opposing member reaches a predetermined distance, and (B) when a predetermined time elapses since the vehicle doors 3 start the closing operation.

The "end time of the predetermined period" corresponds to one of (A) when the vehicle doors 3 reach fully closed positions, (B) when a predetermined time elapses since the vehicle doors 3 become the fully closed state, (C) when the vehicle doors 3 are in the fully closed state and the vehicle 1 departs, and (D) when the vehicle doors 3 are in the fully closed state, the vehicle 1 departs, and a predetermined speed is reached or a predetermined time elapses.

A detailed description will be given of the determination calculation unit 42 with reference to Figs. 16 to 18 as an example. Fig. 16 shows points in time of outputting various signals when the vehicle doors 3 are closed. Signals that are output from start of closing the vehicle doors 3 until the vehicle 1 leaves a station platform are as follows.

At time t1, the vehicle 1 outputs a door-closing signal to the door control device 50. As a result, the vehicle doors 3 move in the closing direction DC. Then, the vehicle doors 3 start to close and become fully closed.

At time t2, the door closing sensor 52 outputs a closing signal. After the vehicle doors 3 are fully closed, the vehicle doors 3 are locked. The vehicle doors 3 are normally locked. At time t3, the door lock sensor 53 detects the lock of the vehicle doors 3 and outputs a lock signal. When all the vehicle doors 3 are normally locked, information indicating that all of the doors are fully closed and locked is shown at the driver's console.

At time t4, a driver causes the vehicle 1 to depart. The vehicle 1 gradually increases the speed and leaves the station platform.

At time t5, the rearmost vehicle 1 reaches the end of the station platform.

At time t5, the determination unit 40 receives information indicating that the rearmost vehicle 1 has reached the end of the station platform by the following means. The rearmost one of vehicle doors 3 reaching the end of the station platform may be detected. The detection may be performed so that, for example, a sensor is attached under the vehicle door 3 at the tail end of the vehicle 1 to detect that the vehicle door 3 has passed through the station platform area. The detection may be performed in cooperation with a platform door to detect that the tail-end vehicle door 3 has passed through the station platform area. Furthermore, not only the tail-end vehicle door 3 but also each vehicle door 3 passing through the station platform area may be detected.

At such points in time of outputting various signals when the vehicle doors 3 are closed (refer to Fig. 16), the determination calculation unit 42 executes different processes in accordance with operation of the vehicle doors 3 as follows.

In a period from reception of the closing signal to reception of the lock signal (hereinafter, referred to as "first period T1," see Fig. 16), the determination calculation unit 42 executes a first determination process (secondary door entrapment detection) described below. In a predetermined period after reception of the lock signal (hereinafter, referred to as "second period T2," see Fig. 16), the determination calculation unit 42 executes a second determination process (secondary door entrapment detection) described below.

The first determination process will be described with reference to Fig. 17.

The determination calculation unit 42 periodically and repeatedly executes the first determination process in the first period T1. In step S1, the determination calculation unit 42 obtains the rotation angle computed by the detection value calculation unit 41 during the first period T1. Subsequently, in step S2, the determination calculation unit 42 compares the rotation angle with a first determination value. When the rotation angle is smaller than the first determination value, the first determination process is terminated. When the rotation angle is a value greater than or equal to the first determination value, a first emergency process is executed in step S3. The first emergency process is executed in another process flow. After the first emergency process is started, the first determination process is terminated. In the first emergency process, the determination calculation unit 42 transmits a "door entrapment signal" to the door control device 50. As described above, upon receiving the "door entrapment signal", the door control device 50 transmits a release signal for opening the vehicle doors 3 to the door driving device 51. Thus, when door entrapment is determined as described above, the vehicle doors 3 open.

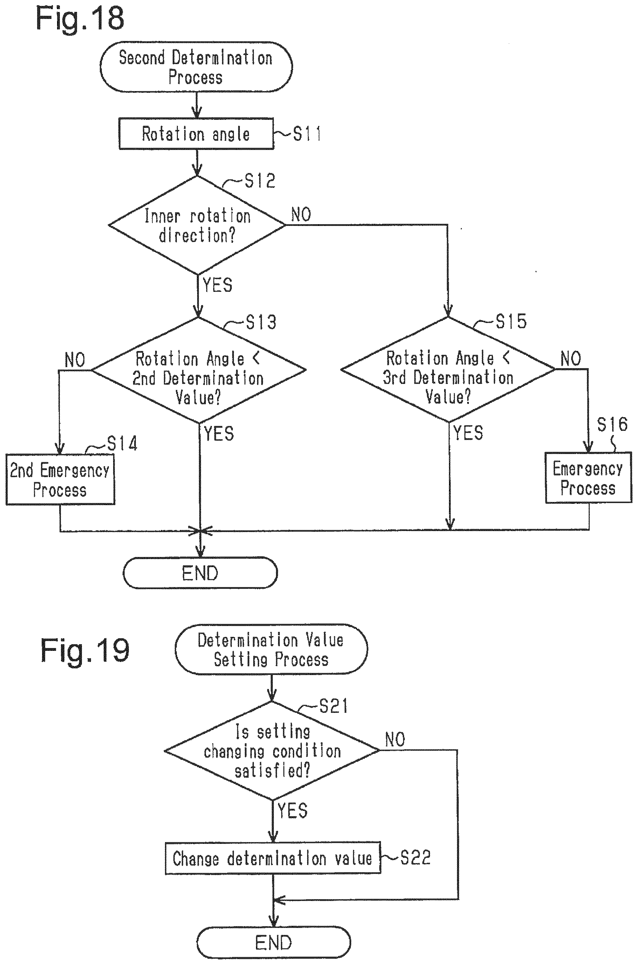

The second determination process (secondary door entrapment detection) will be described with reference to Fig. 18.

In a period (hereinafter, referred to as "second period T2") from reception of the lock signal to when a predetermined stop condition is satisfied, the determination calculation unit 42 periodically and repeatedly executes the second determination process. To prevent failures to detect door entrapment, it is preferred that the predetermined cycle be set to a minimum cycle within a feasible range of the determination calculation unit 42.

The stop condition is a condition for stopping the second determination process. Three examples of the stop condition below will be described below. A first example of the stop condition is that a preset time elapses from reception of a lock signal as a start point. A second example of the stop condition is that the vehicle 1 departs and the rearmost vehicle 1 reaches a predetermined position with relation to the station platform (e.g., downstream end in a traveling direction of the vehicle 1). Satisfaction of the stop condition of the second example corresponds to detection of time t5 (Fig. 16). A third example of the stop condition is that the vehicle 1 departs and reaches a predetermined speed. When the stop condition is satisfied, execution of the second determination process is stopped.

In step S11, the determination calculation unit 42 obtains the rotation direction and the rotation angle computed by the detection value calculation unit 41. Subsequently, in step S12, the determination calculation unit 42 determines whether the rotation direction corresponds to the inner rotation direction RB. When the rotation direction corresponds to the inner rotation direction RB, step S13 is executed. When the rotation direction does not correspond to the inner rotation direction RB, that is, when the rotation direction corresponds to the outer rotation direction RA, step S15 is executed.

In step S13, the determination calculation unit 42 compares the rotation angle with a second determination value. When the rotation angle is smaller than the second determination value, the second determination process is terminated. When the rotation angle is greater than or equal to the second determination value, a second emergency process is executed in step S14. The second emergency process is executed in another process flow. After the second emergency process is started, the second determination process is terminated. In the second emergency process, the determination calculation unit 42 transmits an "in-vehicle door entrapment signal" to the door control device 50. As described above, upon receiving the "in-vehicle door entrapment signal," the door control device 50 transmits a communication signal for reporting that door entrapment may have occurred in the vehicle to the control device 4 of the vehicle 1.

In step S15, the determination calculation unit 42 compares the rotation angle with a third determination value. When the rotation angle is smaller than the third determination value, the second determination process is terminated. When the rotation angle is greater than or equal to the third determination value, an emergency process is executed in step S16. The emergency process is executed in another process flow. After the emergency process is started, the second determination process is terminated. In the emergency process, the determination calculation unit 42 transmits a "dragging signal" to the door control device 50. As described above, upon receiving the "dragging signal", the door control device 50 transmits an emergency signal for reporting that dragging may have occurred to the control device 4 of the vehicle 1.

Next, changes in the determination value will be described.

As described above, in the present embodiment, the determination value used for door entrapment determination is changed when the determination of step S2 is made in the first determination process, the determination of step S13 is made in the second determination process, and the determination of step S15 is made in the second determination process.

A reason for changing the determination value is as follows.

Even when the vehicle doors 3 are in the fully closed state, the rotary body 12 of the door entrapment sensor 11 may rotate due to factors other than door entrapment. For example, the vehicle doors 3 are moved in the vehicle width direction DX by vibration of the vehicle doors 3 when the vehicle 1 departs, vibration of the vehicle doors 3 when the vehicle 1 is traveling, or a leaning load of a person applied to the vehicle doors 3. This may rotate the rotary body 12. Additionally, when the station platform or the inside of the vehicle 1 is crowded, loads corresponding to people are applied to the vehicle doors 3. As a result, the vehicle doors 3 move in the vehicle width direction DX, and the rotary body 12 rotates. As described above, the rotary body 12 rotates due to factors other than door entrapment. Thus, the determination unit 40 may determine that door entrapment has occurred even when door entrapment has not occurred. Hereinafter, such determination will be referred to as "erroneous determination."

The frequency of erroneous determination of the determination unit 40 may change depending on the setting of the determination value.

For example, when the determination value of door entrapment determination is decreased, the determination unit 40 determines door entrapment based on a smaller rotation angle as compared to a case in which the determination value of door entrapment determination is not decreased. Thus, door entrapment is detected more frequently. Also, the probability of erroneous determination in the result of door entrapment detection increases. However, when the determination value is decreased, there is a merit of reducing detection failures, that is, actual door entrapment not being detected. On the other hand, when the determination value is increased, the determination unit 40 determines door entrapment based on a larger rotation angle as compared to a case in which the determination value is not increased. Thus, door entrapment is detected less frequently. Also, the probability of erroneous determination in the result of door entrapment detection decreases. However, when the determination value is increased, detection failures, that is, actual door entrapment not being detected, may increase.

In the door entrapment detection, required levels of "the frequency of detecting door entrapment" and "the door entrapment detection failure" differ depending on the surrounding state of the vehicle doors 3 and the operation of the vehicle doors 3. For example, when the vehicle 1 is at a standstill and congested, it is desirable that the frequency of detecting door entrapment is low. This is because if the frequency of detecting door entrapment is high and thus erroneous determination frequently occurs, the accurate vehicle operation may be affected. On the other hand, immediately after departure of the vehicle 1, it is preferred that "the door entrapment detection failure" less frequently occur and that the "erroneous determination" less frequently occur. This is because when door entrapment ("dragging") actually occurs and the vehicle 1 departs, if the door entrapment is not detected, a safety problem arises.

For this reason, if the determination value is fixed to a predetermined value, the following problem occurs. More specifically, when the determination value is set to a small value within a range in which door entrapment is detectable, erroneous determination frequently occurs. As a result, when the station platform is congested, the vehicle doors 3 will be frequently opened and closed, which may interfere with the scheduled operation of the vehicle 1. When the determination value is set to a large value within the range in which door entrapment is detectable, there may be a failure to detect actual door entrapment at the time of departure of the vehicle 1. In this regard, the determination value may be set to an intermediate value within the range in which door entrapment is detectable. However, in this case, the frequency of opening and closing the vehicle doors 3 will not be reduced during congestion, and the safety problem of not detecting door entrapment ("dragging") at the time of departure of the vehicle 1 remains without a significant improvement.

In this regard, in the present embodiment, the setting unit 43 of the determination unit 40 changes the determination value (reference value) based on at least one of the surrounding states of the vehicle doors 3 or the operation of the vehicle doors 3. The "surrounding states of the vehicle doors 3" include, for example, a congestion level of the station platform, a congestion level in the vehicle 1, and a change in the relative positions of the vehicle doors 3 and the station platform due to departure of the vehicle 1. The "operation of the vehicle doors 3" includes, for example, an operation of the door entrapment sensor 11 of the vehicle doors 3 (e.g., operation of the rotary body 12), closing of the vehicle doors 3, and locking of the vehicle doors 3. Specifically, the "surrounding states of the vehicle doors 3" include, for example, a change between a period from when the vehicle doors 3 are fully closed until the vehicle doors 3 are locked and a period after the vehicle doors 3 are locked; a change between when the vehicle 1 is at a standstill and when the tail end of the vehicle 1 reaches a predetermined position with relation to the station platform after departure of the vehicle 1; a change between when the vehicle 1 is at a standstill and when a predetermined speed is reached after departure of the vehicle 1 or a predetermined time elapses after departure; a congestion level based on at least one of the passenger rate or density of people at the station platform; and a section of the route of the vehicle. The "operation of the vehicle doors 3" includes, for example, the rotation direction of the rotary body 12. When determination is performed in accordance with the surrounding states of the vehicle doors 3 or the operation of the vehicle doors 3, appropriate determination is made in accordance with each situation or each state.

Specifically, as shown in the first determination process, in the first period T1, that is, when the vehicle 1 is at a standstill, door entrapment determination is performed using the first determination value in the period from reception of the closing signal to reception of the lock signal. In the first period T1, frequent occurrence of door entrapment detection may disturb the scheduled operation of the vehicle. Thus, for example, the first determination value may be set to a low value within the range in which door entrapment is detectable.

As shown in the second determination process, in the second period T2, that is, a predetermined period after reception of the lock signal, that is, a period between immediately before and after departure of the vehicle 1, the determination process is performed on door entrapment using the second determination value and the third determination value.

The second determination value is used for door entrapment determination when the rotation direction of the rotary body 12 is the inner rotation direction RB. The rotation direction of the rotary body 12 being the inner rotation direction RB indicates a state in which an object trapped by the doors is drawn into the vehicle. In this situation, the scheduled operation of the vehicle 1 is subtly affected, and there is little interference with the safety of the vehicle 1. Therefore, the second determination value may be set to, for example, an intermediate value within the range in which door entrapment is detectable.

The third determination value is used for door entrapment determination when the rotation direction of the rotary body 12 is the outer rotation direction RA. The rotation direction of the rotary body 12 being the outer rotation direction RA indicates a state in which an object trapped by the doors is drawn out of the vehicle. In this situation, it is assumed that dragging is present or an object is drawn toward the outside of the vehicle 1. For this reason, the third determination value is set to a low value (hereinafter, referred to as the "value of the first example") within the range in which door entrapment is detectable. When dragging is present or an object is drawn toward the outside of the vehicle 1, the rotation angle of the rotary body 12 increases. In this regard, the third determination value may be set to a value larger than the "value of the first example."

As described above, the determination value is set in accordance with the surrounding states of the vehicle doors 3 or the operation of the vehicle doors 3. Thus, door entrapment detection is performed in accordance with the surrounding states of the vehicle doors 3 or the operation of the vehicle doors 3. As a result, disturbance of the scheduled operation of the vehicle that would be caused by erroneous determination of door entrapment is limited, and the vehicle safety will not be adversely affected by failures to detect door entrapment.

In the above description, the determination value is changed by changing the determination process. However, as described below, in each determination process, the setting unit 43 may change the determination value in the determination process.

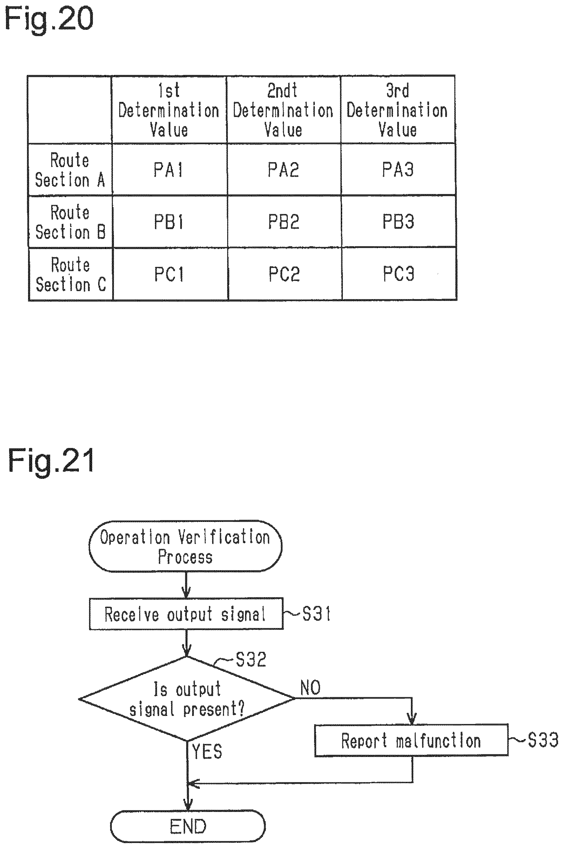

The setting unit 43 will be described with reference to Figs. 19 and 20.

The setting unit 43 changes the first determination value, the second determination value, and the third determination value used for the first determination process and the second determination process based on at least one of the surrounding states of the vehicle doors 3 or the operation of the vehicle doors 3.

A description will be given of a "determination value setting process" executed by the setting unit 43.

The determination value setting process is executed in a predetermined cycle.

In step S21, it is determined whether a setting changing condition is satisfied to determine whether the present setting should be changed.

When the setting changing condition is not satisfied in step S21, the setting unit 43 ends the determination value setting process. When the setting changing condition is satisfied, the setting unit 43 executes step S22. In step S22, at least one of the first determination value, the second determination value, or the third determination value is changed.

The setting unit 43 changes at least one of the first determination value, the second determination value, or the third determination value, for example, in accordance with a congestion level. For example, the congestion level is computed based on at least one of the passenger rate or the density of people at the station platform. A passenger rate output from the control device 4 of the vehicle 1 is used as the passenger rate. The passenger rate refers to a ratio of occupants to the capacity of one vehicle 1, and can be computed based on a change in the mass of the vehicle 1. The density of people at the station platform is computed, for example, based on image processing of an image captured by a camera attached to the station platform. For example, the setting unit 43 increases the first determination value as the congestion level increases. This change is made when the setting changing condition is next satisfied. In more detail, the determination value is changed immediately after the vehicle doors 3 are fully closed, that is, in a period between reception of the closing signal and start of the first determination process. As the congestion increases, the frequency of erroneous determination of door entrapment detection increases. However, according to a change such as that described above, the frequency of occurrence of erroneous determination decreases. This limits increases in the frequency of unnecessary opening and closing of the vehicle doors 3.

The setting unit 43 changes at least one of the first determination value, the second determination value, or the third determination value in accordance with sections of the route of the vehicle 1. An average congestion level over a day differs depending on sections of the route. For example, an urban section of the route may be crowded all day. A suburban section of the route may not be as crowded compared to the urban section of the route. For this reason, for example, the first determination value, the second determination value, and the third determination value are changed for each section of the route.

Fig. 20 is a table of the first determination value, the second determination value, and the third determination value set for each section of the route. The determination values are changed based on the sections of the route, for example, before the beginning of the scheduled operation on an operation day. Alternatively, these changes are made before the switching between sections of the route.

Additionally, the setting unit 43 may change at least one of the first determination value, the second determination value, or the third determination value for each station in a specified section of the route. For example, the setting unit 43 sets the first determination value that is different for station A and station B. Further, the setting unit 43 may change at least one of the first determination value, the second determination value, or the third determination value for each station in accordance with time of day. The first determination value differs, for example, in an early morning time from a vehicle system start to seven o'clock, a commuting time from seven o'clock to ten o'clock, a daytime from ten o'clock to sixteen o'clock, a nighttime from sixteen o'clock to twenty o'clock, and midnight time from twenty o'clock to twenty-four o'clock.

The setting unit 43 changes at least one of the first determination value, the second determination value, or the third determination value in accordance with movement of the vehicle 1. For example, after the vehicle 1 departs and the tail end of the vehicle 1 is separated relative to the end of the station platform, the door entrapment detection does not need to be performed. Thus, the determination value is set to a value higher than a maximum value in a range in which the rotation angle can actually reach so that the door entrapment detection is practically not performed. According to this change, after the vehicle 1 leaves the station platform, the door entrapment detection is invalidated. In this case, the setting changing condition is that the tail end of the vehicle 1 is separated from the end of the station platform area.

The setting unit 43 may set at least one of the first determination value, the second determination value, or the third determination value that differ based on if the vehicle is at a standstill and if a predetermined speed is reached after departure of the vehicle 1. The setting unit 43 changes the third determination value, for example, for each of preset speeds. Specifically, the third determination value is changed each time the vehicle speed reaches 1 km/h, 3 km/h, and 5 km/h. It is assumed that when the vehicle speed increases, the rotation angle of the door entrapment sensor 11 increases. Thus, the determination value is changed to a larger value in accordance with increases in the vehicle speed. This limits erroneous determination of door entrapment (dragging) and thus limits disturbance of the scheduled operation of the vehicle caused by the erroneous determination. In this case, the setting changing condition is that the vehicle 1 reaches a predetermined vehicle speed.

The setting unit 43 may set at least one of the first determination value, the second determination value, or the third determination value that differ based on if the vehicle is at a standstill and if a predetermined time elapses after departure of the vehicle 1. The predetermined time corresponds to, for example, each of preset speeds. Specifically, the third determination value is different for a first predetermined amount of time for the vehicle speed to reach 1 km/h, a second predetermined amount of time for vehicle speed to reach 3 km/h, and a third predetermined amount of time for the vehicle speed to reach 5 km/h. This limits erroneous determination of door entrapment (dragging). In this change, the setting changing condition is satisfied when the predetermined time elapses after the vehicle 1 departs.

The operation verification unit 45 will be described with reference to Fig. 21.

The operation verification unit 45 performs operation verification to determine whether the door entrapment sensor 11 is able to detect door entrapment.

For example, if the rotary body 12 of the door entrapment sensor 11 seizes and is difficult to move, when door entrapment occurs, the door entrapment sensor 11 outputs a signal different from that output during a normal operation. As a result, erroneous detection of door entrapment occurs. When there is an abnormality such as a short circuit in a signal formation circuit in the rotation detector 30, the door entrapment sensor 11 outputs a signal different from that output during a normal operation. As a result, erroneous detection of door entrapment occurs. When the door entrapment sensor 11 malfunctions, if door entrapment detection is performed on the assumption that the door entrapment sensor 11 is normal, occurrence of actual door entrapment may not be found and may be overlooked. In this regard, the operation verification is performed on the door entrapment sensor 11.

The operation verification unit 45 verifies whether the door entrapment sensor 11 is operating in a period during which the determination calculation unit 42 is not determining a door entrapment state. The "period during which the determination calculation unit 42 is not determining a door entrapment state" refers to a period excluding a period in which the determination calculation unit 42 determines whether the door entrapment state is present.

In the "period during which the determination calculation unit 42 is not determining a door entrapment state," it is preferred that the operation verification of the door entrapment sensor 11 be performed when the vehicle doors 3 are opening or closing or the vehicle doors 3 are in a closed state (however, excluding period during which whether door entrapment is present is being determined). As shown in a modified example described below, the operation verification of the door entrapment sensor 11 may be performed when the vehicle doors 3 are in an open state. In the present embodiment, the operation verification of the door entrapment sensor 11 is performed during the closing operation of the vehicle doors 3.

A description will be given of an operation verification process executed by the operation verification unit 45 with reference to Fig. 21.

The operation verification unit 45 periodically and repeatedly executes the operation verification process in a period T3. In step S31, the operation verification unit 45 receives an output signal from the detection value calculation unit 41 in the predetermined period T3 (refer to Fig. 16) after the vehicle doors 3 start to close.

In step S32, the operation verification unit 45 determines the presence or absence of an output signal that is output when the rotary body 12 rotates.

When the vehicle doors 3 open and close, the rotary body 12 of the door entrapment sensor 11 slightly shakes due to vibration of the vehicle doors 3. Thus, the rotation detector 30 outputs an output signal corresponding to shaking of the rotary body 12. However, if the rotary body 12 seizes due to a situation such as an object being caught between the rotary body 12 and the cover 26, the rotary body 12 will not shake in accordance with the opening and closing of the vehicle doors 3. Also, if the signal formation circuit of the rotation detector 30 is shorted, an output signal corresponding to shaking of the rotary body 12 will not be output. Thus, the operation verification of the door entrapment sensor 11 may be performed by detecting the signal corresponding to shaking of the rotary body 12.

In step S32, when the operation verification unit 45 determines that there is an output signal corresponding to shaking of the rotary body 12 based on an output signal output from the detection value calculation unit 41, the operation verification unit 45 ends the operation verification process.

When the operation verification unit 45 determines in step S32 that there is no output signal corresponding to shaking of the rotary body 12 based on an output signal output from the detection value calculation unit 41, the operation verification unit 45 reports in step S33 that the door entrapment sensor 11 is malfunctioning. The information indicating that the door entrapment sensor 11 is malfunctioning is transmitted, for example, to the control device 4 of the vehicle 1 through the door control device 50. Based on the information, the control device 4 displays operation malfunction information, at the driver's console, indicating that the vehicle doors 3 corresponding to the malfunctioning door entrapment sensor 11 have malfunction.

Next, a description will be given of an operation of the door entrapment detection device 10.

A typical door entrapment determination uses a determination value that is fixed to a predetermined value. Hence, as described above, the door entrapment determination may be performed inappropriately for the surrounding states of the vehicle doors 3 and the operation of the vehicle doors 3. An inappropriate door entrapment determination interferes with the scheduled operation of the vehicle and, in some cases, may adversely affect the vehicle safety.

In this regard, in the present embodiment, the setting unit 43 of the determination unit 40 changes a determination value of door entrapment based on at least one of the surrounding states of the vehicle doors 3 or the operation of the vehicle doors 3. When door entrapment determination is performed in accordance with the surrounding states of the vehicle doors 3 or the operation of the vehicle doors 3, an appropriate determination is made in accordance with each condition or each state. This limits occurrence of interference with the scheduled operation of the vehicle.

A description will be given of the advantages of the door entrapment detection device 10.

The setting unit 43 (reference value setting unit) changes a determination value (reference value), which is compared with a detection value (output value) to determine whether a door entrapment state is present, based on at least one of the surrounding states of the vehicle doors 3 or the operation of the vehicle doors 3.

According to this configuration, the determination value is changed based on the surrounding states of the vehicle doors 3 and the operation of the vehicle doors 3. Thus, as compared to a case in which the determination value is fixed to a predetermined value, door entrapment is appropriately detected depending on situation. This limits occurrence of interference with the scheduled operation of the vehicle.

The setting unit 43 sets the determination value (reference value) that differs based on a period from when the vehicle doors 3 are fully closed until the vehicle doors are locked and a period after the vehicle doors are locked.

Erroneous determination of door entrapment interferes with the scheduled operation of the vehicle. The significance of effects on the scheduled operation of the vehicle due to the erroneous determination of door entrapment is different for a period before the vehicle doors 3 are locked and a period after the vehicle doors 3 are locked. In this regard, according to the above configuration, the setting unit 43 changes the determination value in accordance with each of the period before the vehicle doors 3 are locked and the period after the vehicle doors 3 are locked. This allows the door entrapment determination to be performed in accordance with changes in the surrounding states of the vehicle doors 3 using determination values corresponding to each surrounding state of the vehicle doors 3. Thus, occurrence of interference with the scheduled operation of the vehicle is limited.

The setting unit 43 sets the determination value (reference value) that differs based on if the vehicle 1 is at a standstill and if the tail end of the vehicle 1 reaches a predetermined position with relation to the station platform after departure of the vehicle 1.

A situation in which door entrapment may occur corresponds to when the vehicle 1 is at a standstill or when the vehicle 1 is moving along the station platform. Therefore, when the vehicle 1 is separated from the station platform area, there is little or no possibility that door entrapment will occur. If erroneous determination occurs when the vehicle 1 is separated from the station platform area, the scheduled operation of the vehicle is affected. In this regard, according to the above configuration, the setting unit 43 sets the determination value that differs based on if the vehicle 1 is at a standstill and if the tail end of the vehicle 1 reaches the predetermined position with relation to the station platform. Thus, occurrence of interference with the scheduled operation of the vehicle is limited.

The setting unit 43 sets the determination value (reference value) that differs based on if the vehicle 1 is at a standstill and if a predetermined speed is reached after departure of the vehicle 1 or a predetermined time elapses after departure.

A situation in which door entrapment may occur corresponds to when the vehicle 1 is at a standstill or when the vehicle 1 is moving along the station platform. Therefore, when the vehicle 1 is moving at a speed that the vehicle 1 may reach at a position away from the station platform area, there is little or no possibility that door entrapment will occur. Additionally, when the time elapsed after departure is longer than the time that the vehicle 1 takes to leave the station platform area, there is little or no possibility that door entrapment will occur. If erroneous determination occurs when the vehicle 1 is separated from the station platform area, the scheduled operation of the vehicle 1 is affected. In this regard, according to the above configuration, the setting unit 43 sets the determination value that differs based on if the vehicle 1 is at a standstill and if the predetermined speed is reached after departure of the vehicle 1 or the predetermined time elapses after departure. Thus, occurrence of interference with the scheduled operation of the vehicle is limited.

The setting unit 43 changes the determination value (reference value) in accordance with the rotation direction of the rotary body 12.

Erroneous determination of door entrapment interferes with the scheduled operation of the vehicle. In erroneous entrapment determination, the significance of effects on the scheduled operation of the vehicle due to the erroneous entrapment determination is different for a case in which the rotary body 12 rotates in the inner rotation direction RB and a case in which the rotary body 12 rotates in the outer rotation direction RA. In this regard, according to the above configuration, the determination value is changed in accordance with the rotation direction of the rotary body 12. This allows the door entrapment determination to be performed in accordance with operations of the vehicle doors 3 using determination values corresponding to each operation of the vehicle doors 3. Thus, occurrence of interference with the scheduled operation of the vehicle is limited.

The setting unit 43 changes the determination value (reference value) in accordance with a congestion level based on at least one of the passenger rate or the density of people at the station platform.

When the station or the inside of the vehicle 1 is crowded, erroneous determination of door entrapment occurs more frequently. Erroneous determination of door entrapment interferes with the scheduled operation of the vehicle. In this regard, according to the above configuration, the determination value is changed based on the congestion level. This allows the door entrapment determination to be performed in accordance with congestion levels using determination values corresponding to each congestion level. Thus, occurrence of interference with the scheduled operation of the vehicle is limited.

The setting unit 43 changes the determination value (reference value) in accordance with sections of the route of the vehicle.

A congestion level differs depending on sections of the route. When the same determination value is used in the sections of the route to determine door entrapment, the frequency of occurrence of erroneous determination is different for different sections of the route. When the scheduled operation of the vehicle is disturbed in a section of the route, the scheduled operation of the vehicle may also be affected in other sections of the route. Thus, it is not preferable to allow interference with the scheduled operation of the vehicle in any section of the route. In this regard, according to the above configuration, the determination value is changed based on sections of the route. This allows the door entrapment determination to be performed in accordance with sections of the route using determination values corresponding to each section of the route. Thus, occurrence of interference with the scheduled operation of the vehicle is limited.

The rotary body 12 of the door entrapment sensor 11 is covered with the cover 26 that exposes the rotary body 12 at the leading end of the vehicle door 3. The cover 26 is in contact with the sealing portion 36 facing the rotary body 12 when the vehicle doors 3 are fully closed.

According to this configuration, in a fully-closed state, the sealing portion 36 is in contact with the cover 26 such that the rotary body 12 is rotatable. Thus, in a fully-closed state, the rotary body 12 is out of contact with the sealing portion 36. Even when the rotary body 12 is in contact with the sealing portion 36, a frictional force between the rotary body 12 and the sealing portion 36 is small. Since the frictional force between the rotary body 12 and the sealing portion 36 is small as described above, when door entrapment occurs, the trapped object can be easily drawn out.

It is preferred that the vehicle door 3 include the contact portion 34a described below. When the vehicle doors 3 are fully closed, the contact portion 34a is in contact with the sealing portion 36, which faces the rotary body 12, to maintain a constant distance between the sealing portion 36 and the rotary body 12. When the vehicle doors 3 are fully closed and the contact portion 34a of the vehicle door 3 is in contact with the sealing portion 36, a position of the vehicle door 3 is set with respect to the sealing portion 36. This hinders the sealing portion 36 from further approaching the rotary body 12 of the vehicle door 3, and the distance between the sealing portion 36 and the rotary body 12 is set. When the distance between the sealing portion 36 and the rotary body 12 is not set, the sealing portion 36 may come into contact with the rotary body 12, and a frictional force may be applied between the rotary body 12 and the sealing portion 36. In this regard, according to the above configuration, the distance between the sealing portion 36 and the rotary body 12 is set, and contact between the sealing portion 36 and the rotary body 12 is limited, This reduces restriction of rotation of the rotary body 12.

In the sealing portion 36, the central part 36s, which extends in the axial direction of the rotary body 12, deforms more easily than parts other than the central part 36s.

Door entrapment is most likely to occur at a central part throughout the vehicle door 3 in the vertical direction. A person tends to be caught by the central part 36s of the vehicle door 3. Hence, as in the above configuration, the central part 36s of the sealing portion 36 deforms more easily than parts other than the central part 36s. This reduces pain when a part of a human body is caught. Additionally, in the above configuration, when an object is thinner than the sealing portion 36, the parts other than the central part 36s restrict movement of the vehicle doors 3 in the closing direction DC, thereby limiting concentration of the force on the trapped object and deformation of the trapped object.

In the door entrapment detection device 10, the rotary body 12 is a coupled body of the divided rotary bodies 13, and the divided rotary bodies 13 are coupled through the joint portions 14b having a regular polygonal cross section perpendicular to the axis C. According to this configuration, the door entrapment sensor 11 having the rotary body 12 may be attached to the curved vehicle door 3.

The door entrapment detection system 9 includes the door entrapment detection device 10 and the door control device for controlling the vehicle doors 3.

According to the door entrapment detection system 9, the door entrapment detection device 10 determines door entrapment based on the determination value. The determination value is changed in accordance with various situations. Thus, as compared to a case in which the determination value is fixed to the predetermined value, occurrence of interference with the scheduled operation of the vehicle is limited.

### Other embodiments

The above embodiment is an exemplary embodiment, and the present invention is not limited to the above embodiment. The above embodiment may be changed as follows. In modified examples below, a description will be given by assigning the same reference symbol as that of a configuration in the above embodiment to a configuration which is substantially the same as the configuration in the above embodiment.

In the above embodiment, the vehicle information management device given as an example of the control device 4 may manage not only the information described above but also information related to traveling of the vehicle. Examples of the information that may be managed by the vehicle information management device include information for operating a brake, information for driving vehicle wheels, and communication information with respect to a management center.

The vehicle information management device manages information corresponding to at least one of the surrounding states of the vehicle doors or the operation of the vehicle doors, and the setting unit 43 (reference value setting unit) may change a reference value based on the information corresponding to at least one of the surrounding states of the vehicle doors 3 or the operation of the vehicle doors 3 transmitted from the vehicle information management device. According to this configuration, the reference value may be changed without an additional sensor that detects the surrounding states of the vehicle doors 3 and the operation of the vehicle doors 3 managed by the vehicle information management device.

The mode of changing the determination value is not limited to that of the above example. For example, in the above embodiment, the first determination value is increased as the congestion level increases. However, conversely, the first determination value may be decreased as the congestion level increases. For example, in a station having a number of supervisors, the supervisors check for door entrapment when the vehicle departs. Thus, there is little necessity for setting the determination value that is different for a case in which the congestion level is high and a case in which the congestion level is low. On the other hand, in a station having few supervisors, the supervisors are more likely to fail to find door entrapment. For this reason, in the station having few supervisors, the first determination value is decreased as the congestion level increases to reduce failures to detect door entrapment.

In the above embodiment, the rotary body 12 of the door entrapment sensor 11 includes the divided rotary bodies 13. However, when the vehicle doors 3 are not curved, the rotary body 12 may not be divided in the direction of the axis C and may be configured as one component.

In the above embodiment, the sealing portion 36 may be modified as follows.

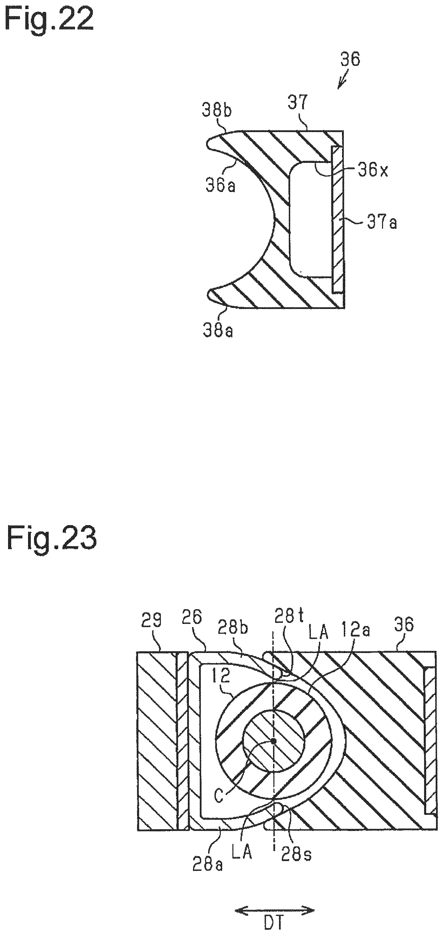

For example, as shown in Fig. 22, the sealing portion 36 may include a hollow portion 36x. Additionally, a groove may extend in an upper surface or a lower surface of the sealing portion 36. This allows for easy deformation of the sealing portion 36 and reduces pain when a part of a person is caught in a fully-closed state.

In the above embodiment, the configuration of the cover 26 may be modified as follows.

As shown in Fig. 23, the end surface 28s of the first side wall 28a and the end surface 28t of the second side wall 28b of the cover 26 may be disposed in the vicinity of an intersection line LA where the surface 12a of the rotary body 12a intersects with a plane extending through the axis C of the rotary body 12 perpendicular to the opening-closing direction DT of the vehicle doors 3. This increases an area exposed on the surface 12a of the rotary body 12. Thus, when an object is trapped by the doors, a contact surface between the object and the rotary body 12 is increased. This restricts slipping of the rotary body 12 with respect to the object and allows for reliable detection of door entrapment.

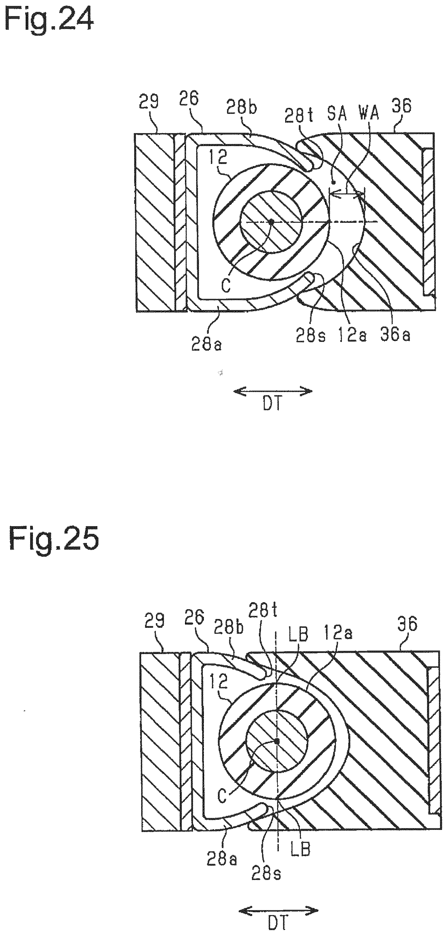

As shown in Fig. 24, in the above embodiment, in a fully-closed state, a width WA of a gap SA between the surface 12a of the rotary body 12 and the leading end surface 36a of the sealing portion 36 may be widened to be greater than or equal to the thickness of the cover 26. The width WA of the gap SA is a width of the gap SA along a line extending through the axis C of the rotary body 12 parallel to the opening-closing direction DT of the vehicle doors 3. Thus, when the vehicle doors 3 are fully closed, the distance between the surface 12a of the rotary body 12 and the leading end surface 36a of the sealing portion 36 is greater than or equal to the thickness of the cover 26, which limits contact between the rotary body 12 and the sealing portion 36.

As shown in Fig. 25, the configuration of the cover 26 may be modified as follows.

The end surface 28s of the first side wall 28a and the end surface 28t of the second side wall 28b of the cover 26 may be disposed at an open side of an intersection line LB where the surface 12a of the rotary body 12 intersects with the surface extending through the axis C of the rotary body 12 perpendicular to the opening-closing direction DT of the vehicle doors 3. This increases an area exposed on the surface 12a of the rotary body 12. Thus, when an object is trapped by the doors, a contact surface between the object and the rotary body 12 increases. This restricts slipping of the rotary body 12 with respect to the object and allows for reliable detection of door entrapment.

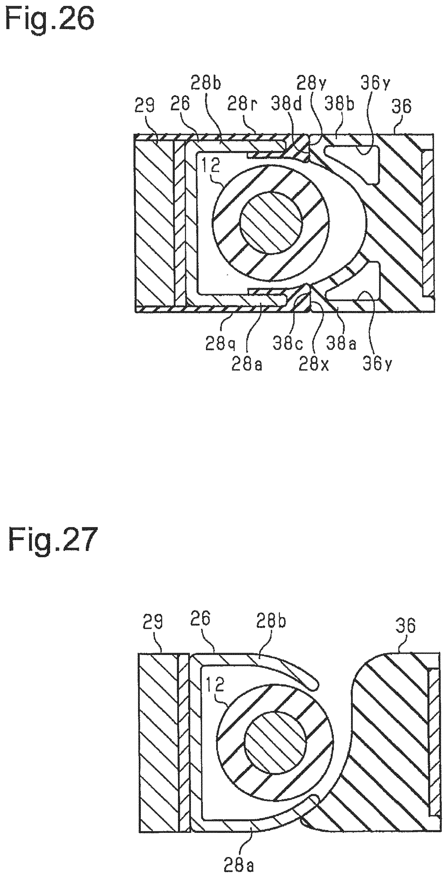

As shown in Fig. 26, the configuration of contact between the cover 26 and the sealing portion 36 may be modified as follows.

In the embodiment, the first protrusion 38a and the second protrusion 38b of the sealing portion 36 are in contact with the inner surface of the first side wall 28a and the outer surface of the second side wall 28b of the cover 26, respectively. However, in this modified example, a leading end surface 38c of the first protrusion 38a and a leading end surface 38d of the second protrusion 38b of the sealing portion 36 are in contact with an end surface 28x of a rubber member 28q covering a leading end portion of the first side wall 28a and an end surface 28y of a rubber member 28r covering a leading end portion of the second side wall 28b of the cover 26, respectively. According to this configuration, when the vehicle doors 3 are fully closed, a gap between the leading end of one of the vehicle doors 3 and the leading end of the other vehicle door 3 is sealed. More preferably, in this example, each of the first protrusion 38a and the second protrusion 38b of the sealing portion 36 includes a hollow portion 36y. Thus, the first protrusion 38a and the second protrusion 38b deform easily. This limits formation of a gap between the two vehicle doors 3 when the vehicle doors 3 are fully closed.

One of the first protrusion 38a and the second protrusion 38b may be omitted from the sealing portion 36. As a result, when an object is trapped between the cover 26 and the sealing portion 36, the object may be drawn out with less power.

As shown in Fig. 27, when the second protrusion 38b located outside the vehicle width direction DX is omitted, the following effect is obtained. When the second protrusion 38b is omitted, if an object is trapped between the cover 26 and the sealing portion 36, the object may be drawn out outwardly with less power. For example, when an object is dragged, the object is easily separated from the vehicle doors 3. Thus, the dragging is readily eliminated.

In the above embodiment, the operation verification unit 45 detects shaking of the rotary body 12 when the vehicle doors 3 open and close to verify the operation of the door entrapment sensor 11. Instead, as described below, the rotary body 12 may be actively rotated so that the operation of the door entrapment sensor 11 is verified in accordance with the state of the rotation operation of the rotary body 12.

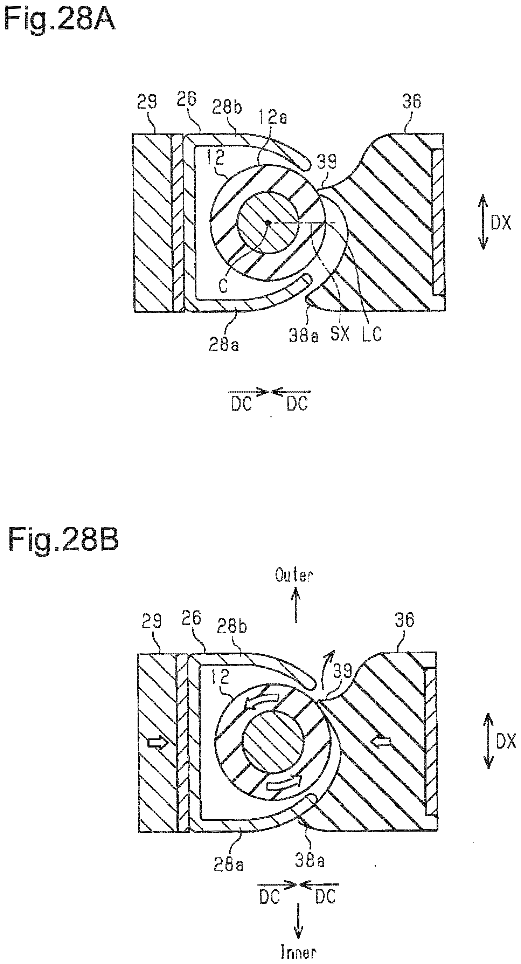

As shown in Figs. 28A and 28B, instead of the first protrusion 38a or the second protrusion 38b of the sealing portion 36, the sealing portion 36 may include a rotation applying portion 39 rotating the rotary body 12. In the present embodiment, the second protrusion 38b is omitted.

The rotation applying portion 39 comes into contact with the rotary body 12 immediately before the vehicle doors 3 are in a fully-closed state. The rotation applying portion 39 is provided, for example, on the sealing portion 36. The sealing portion 36 including the rotation applying portion 39 is shaped to first come into contact with a portion of the surface 12a of the rotary body 12 (hereinafter, referred to as contact portion) other than an intersection line LC at which a surface SX passing through the axis C of the rotary body 12 and extending in the closing direction DC of the vehicle doors 3 intersects with the surface 12a of the rotary body 12. In the sealing portion 36, the rotation applying portion 39 is configured as a protrusion protruding from the base portion 37. An apex of the rotation applying portion 39 located at the door leading side comes into contact with the contact portion. Thus, the rotation applying portion 39 comes into contact with the rotary body 12 immediately before the vehicle doors 3 are fully closed, and the rotary body 12 rotates (refer to Fig. 28B). Immediately before the vehicle doors 3 are fully closed, an output signal output from the rotation detector 30 may be detected to verify the operation of the door entrapment sensor 11. Specifically, when the door entrapment sensor 11 is normal, for example, tests are conducted in advance to obtain a reference range of the rotation angle of the rotary body 12 when the rotation applying portion 39 comes into contact with the rotary body 12. Then, the rotation angle is computed from an output signal output from the rotation detector 30, and whether the door entrapment sensor 11 is malfunctioning is determined by determining whether the rotation angle is within the reference range.

In other words, the rotation applying portion 39 applies force to the surface of the rotary body 12 at a position generating force that rotates the rotary body 12.

According to this configuration, the following effects are obtained. Since the surface of the rotary body 12 receives force at a position generating force that rotates the rotary body 12, the rotary body 12 is forcibly rotated with a simple configuration. For example, immediately before completion of closing the vehicle doors 3, at the beginning of a contact process between the rotary body 12 and the rotation applying portion 39, the sealing portion 36 comes into contact with the surface 12a of the rotary body 12 of the door entrapment sensor 11 on a portion separated from the intersection line LC. As a result, immediately before the vehicle doors 3 are fully closed, the rotary body 12 smoothly rotates. Since the rotary body 12 is rotated by the sealing portion 36, the operation of the rotary body 12 may be verified. Additionally, the sealing portion 36 has a structure that contacts the rotary body 12. Thus, the operation of the door entrapment sensor 11 is verified without increases in the number of parts.

An arrangement position of the rotation applying portion 39 that rotates the rotary body 12 to verify the operation of the door entrapment sensor 11 is not limited to the sealing portion 36. The arrangement position of the rotation applying portion 39 may be any position as long as the position is in the vicinity of a movement path of the vehicle doors 3 and can come into contact with the rotary body 12 when the vehicle doors 3 open and close. For example, the rotation applying portion 39 may be disposed in a housing chamber (door pocket) that houses the vehicle doors 3.

In verification of the operation of the door entrapment sensor 11, in the above embodiment and its modified examples, rotation or shaking of the rotary body 12 due to contact between the rotary body 12 and the rotation applying portion 39 is detected when the vehicle doors 3 open and close. However, according to a configuration below, the operation of the door entrapment sensor 11 may be verified when the vehicle doors 3 are still. For example, the rotation acting portion is configured as an actuator (not illustrated) that applies power to rotate the rotary body 12 by coming into contact with the rotary body of the door entrapment sensor 11. For example, the actuator is a rotor rotated by a motor. When the vehicle doors 3 are still in a fully open state, the rotor is in contact with the rotary body 12 of the door entrapment sensor 11, and the rotor rotates by power of the motor. When the door entrapment sensor 11 is normal, tests are conducted in advance to obtain the reference range of the rotation angle of the rotary body 12 accompanying rotation of the rotor by a predetermined angle when the rotor and the rotary body 12 come into contact with each other. Then, when the vehicle doors 3 are fully opened and the rotor rotates, the rotation angle is computed from an output signal output from the door entrapment sensor 11. Whether the door entrapment sensor 11 is malfunctioning is determined by determining whether the rotation angle is within the reference range.

The operation of the door entrapment sensor 11 may be verified during the following period. For example, the operation of the door entrapment sensor 11 is verified when the vehicle doors 3 are in the closed state (excluding period during which whether door entrapment is present is being determined). Specifically, the operation of the door entrapment sensor 11 is verified when the vehicle is separated from the station platform area during the scheduled operation of the vehicle. Even when the vehicle doors 3 are in the closed state, if the rotary body 12 does not seize, the rotary body 12 slightly shakes during the scheduled operation of the vehicle. Thus, in such a period, the operation of the rotary body 12 may be verified.

Various technologies related to door entrapment detection may be applied not only to the vehicle doors 3 having the structure of the leading end described in the present embodiment and other embodiments but also to vehicle doors 3 when the vehicle doors 3 have the rotary body 12. In the leading end structure of the vehicle doors 3 given in the present embodiment and other embodiments, when the vehicle doors 3 are fully closed, the cover 26 and the sealing portion 36 are in contact with each other, and the sealing portion 36 is not in contact with the rotary body 12. However, as described below, the various technologies related to door entrapment detection may be applied to vehicle doors 3 having a leading end structure in which a sealing portion 66 comes into contact with the rotary body 12.

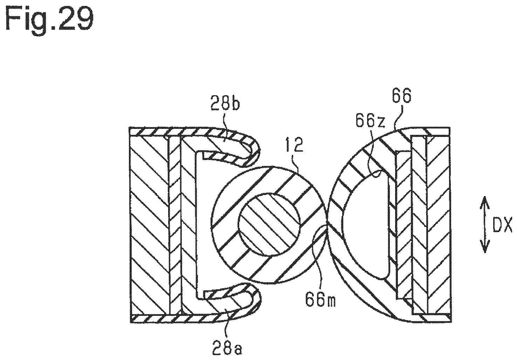

Fig. 29 is a cross-sectional view of the vehicle doors 3 having the leading end structure in which the sealing portion 66 is in contact with the rotary body 12. The sealing portion 66 is configured to protrude to the door leading side in a cross section perpendicular to the vertical direction DZ. The sealing portion 66 is configured such that an intermediate portion 66m in the vehicle width direction DX is closest to the rotary body 12 on an outer peripheral surface of the sealing portion 66. When the vehicle doors 3 are fully closed, the rotary body 12 and the intermediate portion 66m on the outer peripheral surface of the sealing portion 66 are in contact with each other. The sealing portion 66 includes a hollow portion 66z.

The door entrapment detection device 10 may include the door control device 50 in addition to the determination unit 40. In this case, the door control device 50 and the determination unit 40 can be accommodated in one package. A controller of the door control device 50 may be configured to perform calculation executed by the determination unit 40. In this case, the controller includes the determination unit 40.

Use of the term "at least one of X or Y" herein encompasses a situation having X and not having Y, a situation having Y and not having X, and/or a situation having both X and Y.

The above description is intended to be illustrative, and not restrictive. For example, the above-described examples (or one or more aspects thereof) may be used in combination with each other, within the scope of the claims.

## Claims

1. A door entrapment detection device (10), comprising:
a determination unit (42) configured to determine whether a door entrapment state is present based on a comparison result between an output value from a sensor (11) configured to detect rotation of a rotary body (12) provided at a leading end of a vehicle door (3) and a reference value serving as a criterion for determining whether the door entrapment state is present;
**characterized in that** the door entrapment detection device (10) further comprises
a reference value setting unit (43) configured to change the reference value, based on at least one of a surrounding state of the vehicle door (3) or an operation of the vehicle door (3).

2. The door entrapment detection device (10) according to claim 1, wherein the reference value setting unit (43) is configured to change the reference value so that the reference value that is based on a period from when the vehicle door (3) is fully closed until the vehicle door (3) is locked differs from the reference value that is based on a period after the vehicle door (3) is locked.

3. The door entrapment detection device (10) according to claim 1 or 2, wherein the reference value setting unit (43) is configured to change the reference value so that the reference value that is based on if a vehicle (1) is at a standstill differs from the reference value that is based on if the vehicle (1) departs and a tail end of the vehicle (1) reaches a predetermined position with relation to a station platform.

4. The door entrapment detection device (10) according to any one of claims 1 to 3, wherein the reference value setting unit (43) is configured to change the reference value so that the reference value that is based on if a vehicle (1) is at a standstill differs from the reference value that is based on if a predetermined speed is reached after departure of the vehicle (1) or a predetermined time elapses after departure of the vehicle (1).

5. The door entrapment detection device (10) according to any one of claims 1 to 4, wherein the reference value setting unit (43) is configured to change the reference value in accordance with a rotation direction of the rotary body (12).

6. The door entrapment detection device (10) according to any one of claims 1 to 5, wherein the reference value setting unit (43) is configured to change the reference value in accordance with a congestion level based on at least one of a passenger rate or a density of people at a station platform.

7. The door entrapment detection device (10) according to any one of claims 1 to 6, wherein the reference value setting unit (43) is configured to change the reference value in accordance with a section of a route of a vehicle (1).

8. The door entrapment detection device (10) according to any one of claims 1 to 7, wherein the reference value setting unit (43) is configured to change the reference value based on information corresponding to at least one of the surrounding state of the vehicle door (3) or the operation of the vehicle door (3) transmitted from a vehicle information management device (4).

9. The door entrapment detection device (10) according to any one of claims 1 to 8, further comprising
the sensor (11) including the rotary body (12) provided on a leading end surface (3b) of the vehicle door (3) and a rotation detector (30) configured to detect rotation of the rotary body (12).

10. The door entrapment detection device (10) according to claim 9, wherein
the rotary body (12) is covered with a cover (26) that exposes a side of the rotary body (12) at a leading end of the vehicle door (3), and
the cover (26) is in contact with a sealing portion (66) facing the rotary body (12) such that the rotary body (12) is rotatable when the vehicle door (3) is fully closed.

11. A door entrapment detection system (9), comprising:
the door entrapment detection device (10) according to any one of claims 1 to 11; and
a door control device (50) that is configured to control the vehicle door (3).

12. The door entrapment detection system (9) according claim 11, wherein
the vehicle door (3) includes a contact portion (34a), and
when the vehicle door (3) is fully closed, the contact portion (34a) is in contact with a sealing portion (66) facing the rotary body (12) to maintain a constant distance between the sealing portion (66) and the rotary body (12).

## Patentansprüche

1. Vorrichtung (10) für Erfassung von Einklemmen in einer Tür, umfassend:
eine Feststellungs-Einheit (42), die so ausgeführt ist, dass sie auf Basis eines Ergebnisses von Vergleich zwischen einem Ausgangswert von einem Sensor (11), der zum Erfassen von Drehung eines Drehkörpers (12) ausgeführt ist, der an einem vorderen Ende einer Fahrzeugtür (3) vorhanden ist, und einem Bezugswert, der als ein Kriterium für Erfassung dahingehend dient, ob der Zustand von Einklemmen in einer Tür vorliegt, feststellt, ob ein Zustand von Einklemmen in einer Tür vorliegt;
**dadurch gekennzeichnet, dass** die Vorrichtung (10) für Erfassung von Einklemmen in einer Tür des Weiteren umfasst:
eine Einheit (43) zum Einstellen des Bezugswertes, die so ausgeführt ist, dass sie den Bezugswert auf Basis eines Umgebungszustandes der Fahrzeugtür (3) oder/und einer Funktion der Fahrzeugtür (3) ändert.

2. Vorrichtung (10) für Erfassung von Einklemmen in einer Tür nach Anspruch 1, wobei die Einheit (43) zum Einstellen des Bezugswertes so ausgeführt ist, dass sie den Bezugswert so ändert, dass der Bezugswert, der auf einer Zeitspanne vom vollständigen Schließen der Fahrzeugtür (3) bis zum Verriegeln der Fahrzeugtür (3) basiert, sich von dem Bezugswert unterscheidet, der auf einer Zeitspanne nach Verriegeln der Fahrzeugtür (3) basiert.

3. Vorrichtung (10) für Erfassung von Einklemmen in einer Tür nach Anspruch 1 oder 2, wobei die Einheit (43) zum Einstellen des Bezugswertes so ausgeführt ist, dass sie den Bezugswert so ändert, dass der Bezugswert, der darauf basiert, ob ein Fahrzeug (1) in einem Stillstand ist, sich von dem Bezugswert unterscheidet, der darauf basiert, ob das Fahrzeug (1) abfährt und ein hinteres Ende des Fahrzeugs (1) eine vorgegebene Position in Bezug auf einen Bahnsteig erreicht.

4. Vorrichtung (10) für Erfassung von Einklemmen in einer Tür nach einem der Ansprüche 1 bis 3, wobei die Einheit (43) zum Einstellen des Bezugswertes so ausgeführt ist, dass sie den Bezugswert so ändert, dass der Bezugswert, der darauf basiert, ob ein Fahrzeug (1) in einem Stillstand ist, sich von dem Bezugswert unterscheidet, der darauf basiert, ob eine vorgegebene Geschwindigkeit nach Abfahrt des Fahrzeugs (1) erreicht ist oder eine vorgegebene Zeit nach Abfahrt des Fahrzeugs (1) verstreicht.

5. Vorrichtung (10) für Erfassung von Einklemmen in einer Tür nach einem der Ansprüche 1 bis 4, wobei die Einheit (43) zum Einstellen des Bezugswertes so ausgeführt ist, dass sie den Bezugswert entsprechend einer Drehrichtung des Drehkörpers (12) ändert.

6. Vorrichtung (10) für Erfassung von Einklemmen in einer Tür nach einem der Ansprüche 1 bis 5, wobei die Einheit (43) zum Einstellen des Bezugswertes so ausgeführt ist, dass sie den Bezugswert entsprechend einer Überlastungsneigung (congestion level) ändert, die auf einem Fahrgast-Besetzungsgrad oder einer Dichte von Personen auf einem Bahnsteig basiert.

7. Vorrichtung (10) für Erfassung von Einklemmen in einer Tür nach einem der Ansprüche 1 bis 6, wobei die Einheit (43) zum Einstellen des Bezugswertes so ausgeführt ist, dass sie den Bezugswert entsprechend einem Abschnitt einer Route eines Fahrzeugs (1) ändert.

8. Vorrichtung (10) für Erfassung von Einklemmen in einer Tür nach einem der Ansprüche 1 bis 7, wobei die Einheit (43) zum Einstellen des Bezugswertes so ausgeführt ist, dass sie den Bezugswert auf Basis von Informationen ändert, die dem Umgebungszustand der Fahrzeugtür (3) oder/und der Funktion der Fahrzeugtür (3) entsprechen und von einer Vorrichtung (4) zur Verwaltung von Fahrzeug-Informationen übertragen werden.

9. Vorrichtung (10) für Erfassung von Einklemmen in einer Tür nach einem der Ansprüche 1 bis 8, die des Weiteren umfasst:
den Sensor (11), der den Drehkörper (12), der an einer vorderen Endfläche (3b) der Fahrzeugtür (3) vorhanden ist, sowie einen Drehungs-Detektor (30) einschließt, der zum Erfassen von Drehung des Drehkörpers (12) ausgeführt ist.

10. Vorrichtung (10) für Erfassung von Einklemmen in einer Tür nach Anspruch 9, wobei
der Drehkörper (12) mit einer Abdeckung (26) abgedeckt ist, die eine Seite des Drehkörpers (12) an einem vorderen Ende der Fahrzeugtür (3) freilegt, und
die Abdeckung (26) so in Kontakt mit einem dem Drehkörper (12) zugewandten Dichtungsabschnitt (66) ist, dass der Drehkörper (12) gedreht werden kann, wenn die Fahrzeugtür (3) vollständig geschlossen ist.

11. System (9) für Erfassung von Einklemmen in einer Tür, umfassend:
die Vorrichtung (10) für Erfassung von Einklemmen in einer Tür nach einem der Ansprüche 1 bis 10, sowie
eine Tür-Steuerungsvorrichtung (50), die zum Steuern der Fahrzeugtür (3) ausgeführt ist.

12. System (9) für Erfassung von Einklemmen in einer Tür nach Anspruch 11, wobei
die Fahrzeugtür (3) einen Kontaktabschnitt (34a) enthält, und
wenn die Fahrzeugtür (3) vollständig geschlossen ist, der Kontaktabschnitt (34a) in Kontakt mit einem dem Drehkörper (12) zugewandten Dichtungsabschnitt (66) ist, um einen konstanten Abstand zwischen dem Dichtungsabschnitt (66) und dem Drehkörper (12) aufrechtzuerhalten.

## Revendications

1. Dispositif de détection de coincement de portière (10), comprenant :
une unité de détermination (42) configurée pour déterminer si un état de coincement de portière est ou non présent selon un résultat de comparaison entre une valeur de sortie issue d'un capteur (11) configuré pour détecter une rotation d'un corps rotatif (12) disposé à l'extrémité avant d'une portière de véhicule (3) et une valeur de référence servant de critère pour déterminer si l'état de coincement de portière est ou non présent ;
**caractérisé en ce que** le dispositif de détection de coincement de portière (10) comprend en outre une unité de détection de valeur de référence (43) configurée pour changer la valeur de référence, selon au moins un d'un état environnant de la portière de véhicule (3) ou d'un fonctionnement de la portière de véhicule (3).

2. Le dispositif de détection de coincement de portière (10) selon la revendication 1, dans lequel l'unité de définition de valeur de référence (43) est configurée pour changer la valeur de référence de sorte que la valeur de référence qui repose sur une période allant du moment où la portière de véhicule (3) est complètement fermée jusqu'à ce que la portière de véhicule (3) soit verrouillée diffère de la valeur de référence qui repose sur une période débutant après que la portière de véhicule (3) soit verrouillée.

3. Le dispositif de détection de coincement de portière (10) selon la revendication 1 ou 2, dans lequel l'unité de définition de valeur de référence (43) est configurée pour changer la valeur de référence de sorte que la valeur de référence qui repose sur le fait qu'un véhicule (1) est ou non à l'arrêt diffère de la valeur de référence qui repose sur le fait que le véhicule (1) démarre et qu'une extrémité arrière du véhicule (1) atteint une position prédéterminée en relation à un quai de station.

4. Le dispositif de détection de coincement de portière (10) selon l'une quelconque des revendications 1 à 3, dans lequel l'unité de définition de valeur de référence (43) est configurée pour changer la valeur de référence de sorte que la valeur de référence qui repose sur le fait qu'un véhicule (1) est ou non à l'arrêt diffère de la valeur de référence qui repose sur le fait qu'une vitesse prédéterminée est atteinte après un départ du véhicule (1) ou qu'une durée prédéterminée s'est écoulée après un départ du véhicule (1).

5. Le dispositif de détection de coincement de portière (10) selon l'une quelconque des revendications 1 à 4, dans lequel l'unité de définition de valeur de référence (43) est configurée pour changer la valeur de référence selon une direction de rotation du corps rotatif (12).

6. Le dispositif de détection de coincement de portière (10) selon l'une quelconque des revendications 1 à 5, dans lequel l'unité de définition de valeur de référence (43) est configurée pour changer la valeur de référence selon un niveau d'encombrement fondé sur au moins un d'un taux de passagers ou d'une densité de personnes sur un quai de station.

7. Le dispositif de détection de coincement de portière (10) selon l'une quelconque des revendications 1 à 6, dans lequel l'unité de définition de valeur de référence (43) est configurée pour changer la valeur de référence selon une section d'un trajet d'un véhicule (1).

8. Le dispositif de détection de coincement de portière (10) selon l'une quelconque des revendications 1 à 7, dans lequel l'unité de définition de valeur de référence (43) est configurée pour changer la valeur de référence selon des informations correspondant à au moins un de l'état environnant de la portière de véhicule (3) ou du fonctionnement de la portière de véhicule (3) transmis depuis un dispositif de gestion d'informations de véhicule (4).

9. Le dispositif de coincement de portière (10) selon l'une quelconque des revendications 1 à 8, comprenant en outre
le capteur (11) incluant le corps rotatif (12) disposé sur une surface d'extrémité avant (3b) de la portière de véhicule (3) et un détecteur de rotation (30) configuré pour détecter une rotation du corps rotatif (12).

10. Le dispositif de détection de coincement de portière (10) selon la revendication 9, dans lequel
le corps rotatif (12) est couvert d'un capot (26) qui expose un côté du corps rotatif (12) sur une extrémité avant de la portière de véhicule (3), et
le capot (26) est en contact avec une partie d'étanchéité (66) orientée vers le corps rotatif (12) de sorte que le corps rotatif (12) soit mobile en rotation lorsque la portière de véhicule (3) est complètement fermée.

11. Système de détection de coincement de portière (9), comprenant :
le dispositif de détection de coincement de portière (10) selon l'une quelconque des revendications 1 à 11 ; et
un dispositif de contrôle de portière (50) qui est configuré pour contrôler la portière de véhicule (3).

12. Le système de détection de coincement de portière (9) selon revendication 11, dans lequel
la portière de véhicule (3) inclut une partie de contact (34a), et
lorsque la portière de véhicule (3) est complètement fermée, la partie de contact (34a) est en contact avec une partie d'étanchéité (66) orientée vers le corps rotatif (12) pour maintenir une distance constante entre la partie d'étanchéité (66) et le corps rotatif (12).
